# EUROPEAN PATENT APPLICATION

(11) **EP 3 506 643 A2**
(43) Date of publication of application: **03.07.2019**
(21) Application number: 18214656.3
(22) Date of filing: 20.12.2018
(51) Int. Cl.: H04N 21/436

(54) **ELECTRONIC APPARATUS AND METHOD THEREOF**

(30) Priority: 26.12.2017 KR 20170180066
(71) Applicant: Samsung Electronics Co., Ltd., Suwon-si, Gyeonggi-do, 16677 (KR)
(72) Inventor: HA, Jia, 16677 Gyeonggi-do (KR); CHUN, Seongsoo, 16677 Gyeonggi-do (KR); JUNG, Hoichul, 16677 Gyeonggi-do (KR)
(74) Representative: Appleyard Lees IP LLP

(57) **Abstract**

Disclosed is an electronic apparatus and method thereof. The electronic apparatus comprises a device connector configured to connect with at least one first source device, a signal input/output unit configured to output a signal of the first source device to an intermediation apparatus and a display apparatus, or receive a signal of at least one second source device through the intermediation apparatus, and a processor configured to control the signal of the second source device to be input through the signal input/output unit and control the input signal of the second source device to be output to the display apparatus in response to a user's input through the display apparatus.

## Description

### CROSS-REFERENCE TO RELATED THE APPLICATION

The application is based on and claims priority under 35 U.S.C. §119 from Korean Patent Application No. 10-2017-0180066 filed on December 26, 2017 in the Korean Intellectual Property Office, the disclosure of which is incorporated herein by reference in its entirety.

### BACKGROUND

### Field

The disclosure relates to an electronic apparatus and method, and more particularly to an electronic apparatus or the like for sharing an image source device.

### Description of the Related Art

With development of a home network, connectivity between electronic devices present in home has been increased. In particular, when a plurality of display apparatuses is present in home, an image source device connected to one display apparatus may be required to be used in another display apparatus. That is, there may be a need of receiving an image signal from an image source device, which is not directly connected to a display apparatus being used by a user, and reproducing a corresponding image.

To this end, a conventional technology provides a configuration in which image source devices are connected to a hub, and each display apparatus receives an image signal from the hub through a separate receiver. However, such a conventional technology has problems in that there is a separate need of the hub and the receiver, there are no consistency because a user interface (Ul) for the display apparatus is different from a UI for the receiver, a control apparatus is separately needed for controlling the receiver, and there is a limit to a spatial layout for the image source devices because all the image source devices have to be connected to the hub, and so on.

### SUMMARY

In accordance with an aspect of the disclosure, an aspect of one or more exemplary embodiments is to provide an electronic apparatus capable of accessing and controlling an image source device so that a user cannot distinguish whether or not the image source device is directly connected to the display apparatus being currently used by the user, i.e. so that the user can feel as if all the source devices in home are directly connected to the display apparatus being currently used by the user as long as the image source devices are present in home.

According to one exemplary embodiment, there is provided an electronic apparatus comprising: a device connector configured to connect with at least one first source device; a signal input/output structured to output a signal of the first source device to an intermediation apparatus and a display apparatus, or receive a signal of at least one second source device through the intermediation apparatus; and a processor configured to control the signal of the second source device that is received through the intermediation apparatus to be input through the signal input/output unit and control the input signal of the second source device to be output to the display apparatus in response to a user's input through the display apparatus.

The first source device may be among a plurality of source devices, and the processor may control signals of some source devices of the first source device to be output to the intermediation apparatus through the signal input/output unit in response to a request of the intermediation apparatus or an external electronic apparatus.

The first source device may comprise a plurality of source devices, and the signal input/output unit may output the signal of the first source device to the intermediation apparatus in response to a high definition multimedia interface (HDMI) consumer electronics control (CEC) control signal received from the intermediation apparatus or an external electronic apparatus.

According to one exemplary embodiment, there is provided a display apparatus comprising: a display; a signal input structured to receive a signal of a first source device connected to a first electronic apparatus from the first electronic apparatus, or receive a signal of at least one second source device that outputs a signal to the intermediation apparatus; a user input structured to receive a user's input; and a processor configured to transmit information of the first source device to the intermediation apparatus, receive information of the second source device from the intermediation apparatus, control the signal of the second source device that is received through the intermediation apparatus to be input to the signal input unit through the first electronic apparatus in response to the user's input based on the received information, and control the display to display an image based on the input signal of the at least one second source device.

The processor may control the display to display a user interface (Ul) for allowing a user to select one source device among the first source device and the second source device.

The display apparatus may further comprise a remote controller, wherein: the information of the second source device comprises remote-controller keyset information corresponding to the second source device, the processor controls the display to display an image based on the input signal from the second source device, and transmits a control signal generated by referring to the remote-controller keyset information to the intermediation apparatus in response to a control command received through the remote controller with regard to the image.

According to one exemplary embodiment, there is provided an intermediation apparatus comprising: a signal input/output structured to input and output a signal between a plurality of electronic apparatuses and at least one source device, respectively, the plurality of electronic apparatuses being connectable with at least one source device; and a processor configured to transmit information of a source device while the at least one source device is connected to a first electronic apparatus among the plurality of electronic apparatuses to a second electronic apparatus, and control the signal input/output unit to output a signal of a source device while the at least one source device is connected to the first electronic apparatus to the second electronic apparatus in response to a request of the second electronic apparatus.

The signal input/output unit may be among a plurality of signal input units, a plurality of signal output units, and a switching unit for connecting one among the plurality of signal input units with one among the plurality of signal output units, and the processor may control the switching unit to connect the signal input unit and the signal output unit which are matched so as to output the signal of the source device connected to the first electronic apparatus to the second electronic apparatus, in response to a request of the second electronic apparatus.

The processor may control the signal input/output unit to output the signal of the source device connected to the first electronic apparatus to each of the plurality of electronic apparatuses, in response to a request of the first electronic apparatus.

According to one exemplary embodiment, there is provided a display apparatus comprising: a display; a device connector configured to connect with at least one first source device; a signal input/output structured to output a signal of the first source device to a different display apparatus or receive a signal of at least one second source device connected to the different display apparatus, through an intermediation apparatus; a user input structured to receive a user's input; and a processor configured to transmit information of the first source device to the intermediation apparatus, control the signal of the first source device to be output through the signal input/output unit, receive information of the second source device from the intermediation apparatus, control the signal of the second source device that is received through the intermediation apparatus to be input through the signal input/output unit in response to the user's input based on the received information, and control the display to display an image based on the input signal.

The first source device may be among a plurality of source devices, and the processor controls signals of some source devices of the first source device to be output to the intermediation apparatus through the signal input/output unit in response to a request of the intermediation apparatus or an external electronic apparatus.

The first source device may comprise a plurality of source devices, and the signal input/output unit may output the signal of the first source device to the intermediation apparatus in response to a high definition multimedia interface (HDMI) consumer electronics control (CEC) control signal received from the intermediation apparatus or an external electronic apparatus.

The processor may control the display to display a user interface (Ul) for allowing a user to select one source device among the first source device and the second source device.

The display apparatus may further comprise a remote controller, wherein: the information of the second source device comprises remote-controller keyset information corresponding to the second source device, the processor controls the display to display an image based on the input signal from the second source device, and transmits a control signal generated by referring to the remote-controller keyset information to the intermediation apparatus, in response to a control command received through the remote controller with regard to the image.

According to one exemplary embodiment, there is provided a display apparatus comprising: a display; a user input structured to receive a user's input; and a signal input/output structured to input and output a signal between a plurality of display apparatuses connectable with at least one first source device. A display apparatus according to an embodiment includes a processor configured to transmit information of a first source device while the at least one first source device is connected to a first display apparatus among the plurality of display apparatuses to a second display apparatus, control the signal input/output unit to output a signal of the first source device to the second display apparatus in response to a request of the second display apparatus, control the signal input/output unit to receive the signal of the source device connected to the first display apparatus or second display apparatus in response to the user's input based on the information of the first source device or the information of the second source device connected to the second display apparatus, and control the display to display an image based on the input signal.

The first source device may comprise a plurality of source devices, and the processor may control signals of some source devices of the first source device to be output to the intermediation apparatus through the signal input/output unit in response to a request of the second display apparatus.

The first source device may comprise a plurality of source devices, and the signal input/output unit outputs the signal of the first source device to the intermediation apparatus in response to a high definition multimedia interface (HDMI) consumer electronics control (CEC) control signal received from the second display apparatus.

The processor may control the display to display a user interface (Ul) for allowing a user to select one source device among the first source device and the second source device.

The display apparatus may further comprise a remote controller, wherein: the information of the second source device comprises remote-controller keyset information corresponding to the second source device, the processor controls the display to display an image based on the input signal from the second source device, and transmits a control signal generated by referring to the remote-controller keyset information to the second display apparatus in response to a control command received through the remote controller with regard to the image.

### BRIEF DESCRIPTION OF THE DRAWINGS

The above and/or other aspects, features, and advantages of certain embodiments of the present disclosure will be more will become more apparent and more readily appreciated from the following description of exemplary embodiments, taken in conjunction with the accompanying drawings, in which:
FIG. 1 illustrates a system including an electronic apparatus and an intermediation apparatus according to an embodiment;
FIG. 2 illustrates a configuration of the electronic apparatus and the intermediation apparatus according to an embodiment;
FIGS. 3 to 7 illustrate detailed configurations and operations of the system including the electronic apparatus and the intermediation apparatus according to an embodiment;
FIGS. 8 and 9 illustrate an embodiment;
FIGS. 10 and 11 illustrate an embodiment;
FIGS. 12 and 13 illustrate an embodiment;
FIG. 14 illustrates an embodiment;
FIG. 15 illustrates an example of connection between a switching unit and a signal input/output unit of an intermediation apparatus and an electronic apparatus according to an embodiment;
FIG. 16 illustrates a detailed configuration of the electronic apparatus according to an embodiment;
FIG. 17 illustrates operations of the electronic apparatus and the intermediation apparatus when the source device is connected to the electronic apparatus according to an embodiment;
FIG. 18 illustrates an example of a process that the electronic apparatus updates source information received from the intermediation apparatus according to an embodiment;
FIG. 19 illustrates an example of the electronic apparatus and a display screen of which notifies that the source information is updated according to an embodiment;
FIG. 20 illustrates an example of a source information stored in the electronic apparatus and the intermediation apparatus according to an embodiment;
FIGS. 21 and 22 illustrate examples of a user interface (Ul) that displays a source list according to an embodiment;
FIGS. 23 and 24 illustrate operations of the electronic apparatus and the intermediation apparatus when one source is selected in the source list displayed on the UI according to an embodiment;
FIG. 25 illustrates operations of the electronic apparatus and the intermediation apparatus when a user who is watching an image of a source device on the electronic apparatus makes an input for controlling the source device through a remote controller according to an embodiment;
FIG. 26 illustrates an example of a scenario that a user uses the electronic apparatuses according to an embodiment; and
FIGS. 27 and 28 illustrate operations of the electronic apparatus and the intermediation apparatus when the electronic apparatus functions in a push mode according to an embodiment.

### DETAILED DESCRIPTION OF EXEMPLARY EMBODIMENTS

Below, exemplary embodiments will be described in detail with reference to accompanying drawings. In the drawings, like numerals or symbols refer to like elements having substantially the same function, and the size of each element may be exaggerated for clarity and convenience of description. However, the configurations and functions illustrated in the following exemplary embodiments are not construed as limiting the present inventive concept and the key configurations and functions. In the following descriptions, details about publicly known functions or features will be omitted if it is determined that they cloud the gist of the present inventive concept.

In the following exemplary embodiments, terms 'first', 'second', etc. are only used to distinguish one element from another, and singular forms are intended to include plural forms unless otherwise mentioned contextually. Unless otherwise specified, the terms 'first', 'second', etc. may refer to corresponding components regardless of importance or order without limiting the components. In the following exemplary embodiments, it will be understood that terms 'comprise', 'include', 'have', etc. do not preclude the presence or addition of one or more other features, numbers, steps, operations, elements, components or combination thereof. In addition, a 'module' or a 'portion' may perform at least one function or operation, be achieved by hardware, software or combination of hardware and software, and be modularized into at least one processor. Further, in the following exemplary embodiments, at least one among a plurality of elements refer to not only all of the plurality of elements but also each element among the plurality of elements excluding the other elements or a combination thereof. Also, the expression of "configured to (or set to)" may not necessarily refer to only "specifically designed to" in terms of hardware. Instead, the "device configured to" may refer to "capable of" along with other devices or parts in a certain circumstance. For example, the phrase of "the processor configured to perform A, B, and C" may refer to a dedicated processor (e.g. an embedded processor) for performing the corresponding operations, or a generic-purpose processor (e.g. a central processing unit (CPU) or an application processor) for performing the corresponding operations by executing one or more software programs stored in a memory device.

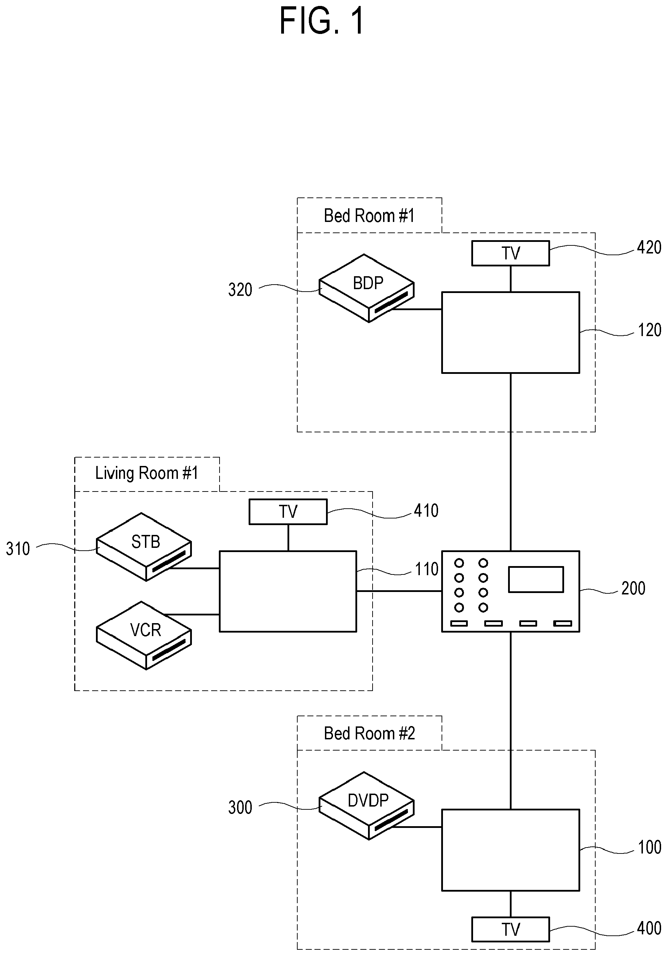

FIG. 1 illustrates a system including an electronic apparatus 100 and an intermediation apparatus 200 according to one exemplary embodiment.

The electronic apparatus 100 receives an image signal from an image source device 300 and outputs the image signal to the display apparatus 400 and/or the intermediation apparatus 200 connecting with the electronic apparatus 100. The image source device 300 refers to a device capable of outputting an image signal, which may for example include an optical media player (e.g., a digital versatile disc player (DVDP), a Blu-ray disc player (BDP), etc.) for playing back a digital versatile disc (DVD), a Blu-ray disc (BD), etc.; an ultra-high definition (UHD) player; a video cassette recorder (VCR); a set-top box (STB); a broadcast receiving apparatus; a computer main body; a mobile apparatus; a home theater apparatus; etc. However, the image source device 300 is not limited to the foregoing examples, but may include any device capable of outputting the image signal.

The image source device 300 may transmit the image signal to the electronic apparatus 100 as directly connected to the electronic apparatus 100, or may transmit the image signal to the electronic apparatus 100 as indirectly connected to the electronic apparatus 100 via the intermediation apparatus 200. Hereinafter, for convenience, in terms of the electronic apparatus 100, the image source device directly connected to the electronic apparatus 100 will be called a 'first source device', and the image source device indirectly connected to the electronic apparatus 100 via the intermediation apparatus 200 will be called a 'second source device'.

The intermediation apparatus 200 receives an image signal from one electronic apparatus 100 and outputs the received image signal to another electronic apparatus 100. That is, the intermediation apparatus 200 refers to an apparatus for relaying an image signal from one apparatus to another apparatus, and may for example correspond to a switch apparatus without limitations. The intermediation apparatus 200 may be configured with a hardware switch and only the minimum controller for controlling the hardware switch, or may be materialized by a software switch and a server provided with a processor for processing and controlling the software switch.

The display apparatus 400 displays an image based on an image signal that the electronic apparatus 100 receives from the image source device 300 and outputs. The display apparatus 400 may for example be materialized by a TV, a smartphone, a tablet computer, a mobile phone, a smartwatch, a head-mounted display or the like wearable device, a computer, a multimedia player, an electronic frame, a digital billboard, a large format display (LFD), a digital signage, a set-top box, a refrigerator, etc. without limitations. Hereinafter, for convenience, the description will be made on the assumption that the display apparatus 400 is a TV. Further, hereinafter, for convenience of description, in terms of the electronic apparatus 100, the display apparatus directly connected to the electronic apparatus 100 will be called a 'first TV', and the display apparatus indirectly connected to the electronic apparatus 100 via the intermediation apparatus 200 will be called a 'second TV'.

Referring to FIG. 1, operations of the electronic apparatus 100 and the intermediation apparatus 200 according to one exemplary embodiment will be summarized. The plurality of electronic apparatuses 100 may be located at spaces partitioned from each other. For example, the plurality of electronic apparatuses 100 may be respectively located at a living room, a bed room #1 and a bed room #2 in home. For convenience, descriptions will be made below on the assumption that the electronic apparatuses 100 are present in home. However, the present inventive concept is not limited to the electronic apparatuses present in home.

Each electronic apparatus 100 may connect with the image source device 300 for providing an image signal to the electronic apparatus 100, and the display apparatus 400 for displaying an image based on the image signal output from the electronic apparatus 100. Each electronic apparatus 100 may connect with a plurality of image source devices 300, and may also connect with the display apparatuses 400.

The electronic apparatus located in one space, for example, the electronic apparatus 110 of FIG. 1 located in the living room may receive an image signal from a first source device 310 directly connected thereto and display an image based on the image signal on a TV 410. Further, the electronic apparatus 110 located in the living room may receive an image signal from a second source device 320 via the intermediation apparatus 200 and display an image based on the image signal on the TV 410. In addition, the electronic apparatus 110 outputs the image signal of the first source device 310 directly connected thereto to the intermediation apparatus 200, so that the image signal can be transmitted to another electronic apparatus via the intermediation apparatus 200. Detailed descriptions will be made below.

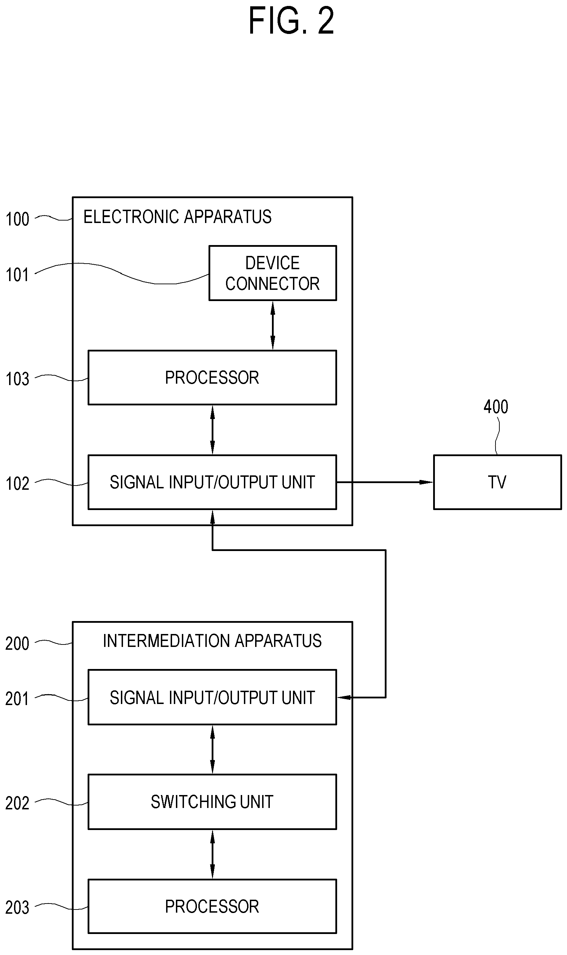

FIG. 2 illustrates a configuration of the electronic apparatus 100 and the intermediation apparatus 200 according to one exemplary embodiment.

The electronic apparatus 100 according to one exemplary embodiment includes a device connector 101, a signal input/output unit 102, and a processor 103.

The device connector 101 of the electronic apparatus 100 is connected to the image source device 300 and receives an image signal from the image source device 300. Further, the device connector 101 may exchange a control signal with the image source device 300. There are no limits to an image signal transmission interface used by the device connector 101. For example, the device connector 101 may use an interface for a radio frequency (RF) signal, Composite video, Component video, Super video, Syndicat des Constructeurs d'Appareils Radiorecepteurs et Téléviseurs (SCART), a high definition multimedia interface (HDMI), DisplayPort, a unified display interface (UDI), or wireless high definition (HD), etc.

The signal input/output unit 102 of the electronic apparatus 100 outputs an image signal, which is received from the image source device 300 through the device connector 101, to the display apparatus 400 and the intermediation apparatus 100, or receives the image signal input to the intermediation apparatus 100. Further, the signal input/output unit 102 may transmit/receive the control signal. The signal input/output unit 102 may be configured as divided into a signal input unit and a signal output unit, or may be configured as a single input/output unit for performing both the input and the output. The signal input/output unit 102 may include a plurality of signal input/output units. The signal input/output unit 102 may input/output a signal through a wire, for example, an optical cable or a copper cable, or may input/output a signal wirelessly. As described above, there are also no specific limits to an interface for the input/output signal.

Meanwhile, the electronic apparatus 100 may further include a display, a light emitting diode (LED) display, or the like to notify the connection states of the device connector 101 and/or the signal input/output unit 102 and what devices are connected.

The processor 103 of the electronic apparatus 100 may perform control for operating general elements of the electronic apparatus 100. The processor 103 may include a control program (or instruction) for performing such control operations, a nonvolatile memory in which the control program is installed, a volatile memory in which at least a part of the installed control program is loaded, and at least one processor or central processing unit (CPU) for executing the loaded control program. Further, the control program may be stored in an electronic apparatus other than the electronic apparatus 100.

The control program may include a program(s) achieved in the form of at least one of a basic input/output system (BIOS), a device driver, an operating system, firmware, a platform, and an application program (or an application). According to one embodiment, the application program may be previously installed or stored in the electronic apparatus 100 when the electronic apparatus 100 is manufactured, or may be installed in the electronic apparatus 100 on the basis of application program data received from the outside when used in the future. The application data may for example be downloaded from an application market and the like external server to the electronic apparatus 100, but not limited thereto. Meanwhile, the processor 103 may be materialized in the form of a device, an S/W module, a circuit, a chip, or combination thereof.

The processor 103 may for example control the device connector 101 for receiving an image signal from the image source device 300. The processor 103 may perform control so that the image signal received through the device connector 101 can be output to the intermediation apparatus 200 through the signal input/output unit 102. In the display apparatus 100 shown in FIG. 2, both the process and control are performed in a single processor 103. However, this is merely an example, and the electronic apparatus 100 according to an alternative exemplary embodiment may include a separate controller in addition to the processor.

According to one exemplary embodiment, the intermediation apparatus 200 includes a signal input/output unit 201, a switching unit 202, and a processor 203.

The descriptions about the signal input/output unit 102 and the processor 103 of the electronic apparatus 100 are also applicable to the signal input/output unit 201 and the processor 203 of the intermediation apparatus 200, and thus detailed descriptions thereof will be omitted.

The switching unit 202 of the intermediation apparatus 200 connects a path between a signal input to the intermediation apparatus 200 and a signal output from the intermediation apparatus 200 so that the signal input to at least one electronic apparatus 100 can be output from at least one electronic apparatus 100, and changes a connection path in response to a control signal or the like. The switching unit 202 may be materialized by a hardware switch, or by software based on a switching program. In a case of the hardware switch, there are no limits to the number of input ports to the switching unit 202 and the number of output ports from the switching unit 202. In a case of a software switching program, there are also no limits to the number of inputs and outputs. Further, 1:N and N:1 connections as well as 1:1 connection are possible between the input ports and the output ports.

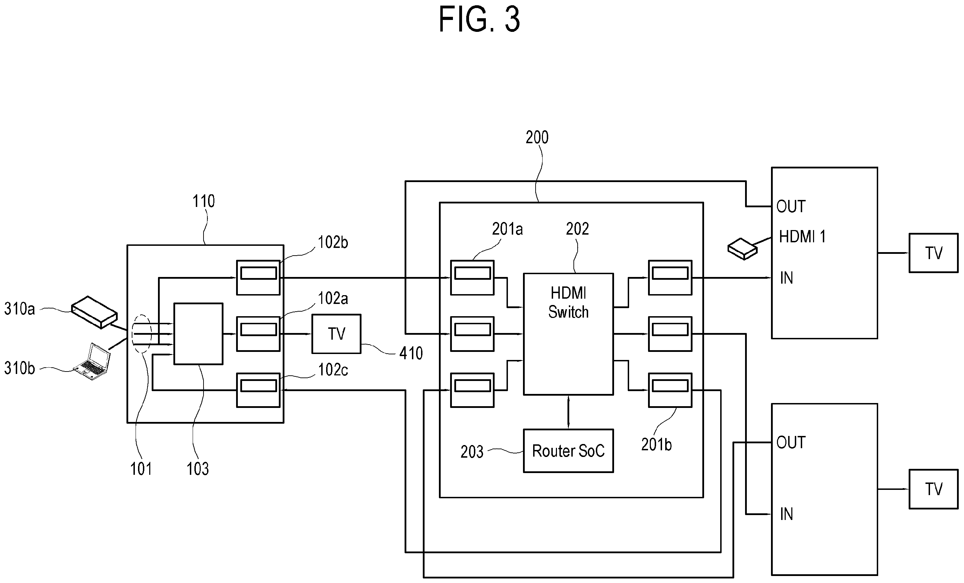

FIG. 3 illustrates detailed configurations of the system including the electronic apparatus 100 and the intermediation apparatus 200 according to one exemplary embodiment. In an exemplary embodiment shown in FIG. 3, the electronic apparatus 100 and the intermediation apparatus 200 are connected by an optical cable. However, there are no limits to the connection method between the electronic apparatus 100 and the intermediation apparatus 200. Alternatively, the electronic apparatus 100 and the intermediation apparatus 200 may be connected wirelessly or by a wire other than the optical cable. Further, FIG. 3 shows that each signal input/output unit 102, 201 of the electronic apparatus 100 and the intermediation apparatus 200 is divided into a signal input unit and a signal output unit, and the signal input unit or the signal output unit is also distinguished according to devices connected thereto. This is merely for convenience of description, and the present inventive concept is not limited to physical separation between the signal input unit and the signal output unit.

The electronic apparatus 100, for example, the electronic apparatus 110 located in the living room may connect with at least one first source device 310, for example, a BDP 310a and a notebook computer 310b. Further, the electronic apparatus 110 may connect with at least one TV 410. The electronic apparatus 110 may receive an image signal from the first source device 310 and output the image signal to the TV 410 through a signal input/output unit 102a. The electronic apparatus 110 may not only exchange the image signal with the TV 410 through the signal input/output unit 102a but also exchange the control signal with the electronic apparatus 110 or the TV 410.

The electronic apparatus 110 may input and output a signal to and from the intermediation apparatus 200. The electronic apparatus 110 may output an image signal, which is received from the first source device 310, to the intermediation apparatus 200 through a signal input/output unit 102b, specifically, to the signal input/output unit 201a of the intermediation apparatus 200. Further, the electronic apparatus 110 may receive a signal, which is output via the switching unit 202 of the intermediation apparatus 200, from the intermediation apparatus 200, specifically, from the signal output unit 201b of the intermediation apparatus 200, through a signal input/output unit 102c of the electronic apparatus 110. The electronic apparatus 110 may exchange not only the image signal with the intermediation apparatus 200 through the signal input/output unit 102b, but also the control signal for the electronic apparatus 100 or the intermediation apparatus 200.

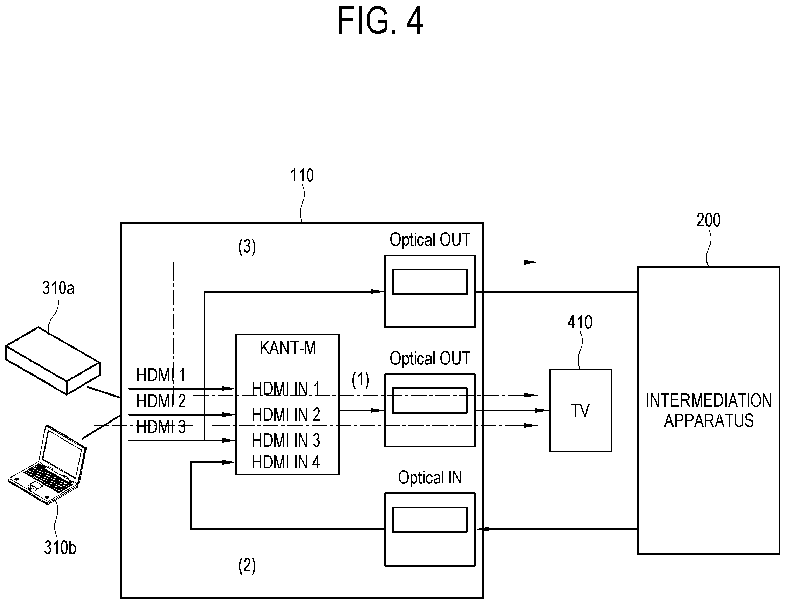

Referring to FIG. 4, operations of the electronic apparatus 100 will be described in more detail. FIG. 4 shows details of the electronic apparatus 100 according to one exemplary embodiment.

The electronic apparatus 110 may receive an image signal from the first source device 310 directly connected to the electronic apparatus and outputs the image signal to the TV 410. Specifically, the processor 103 of the electronic apparatus 110 performs control so that the image signal of the first source device 310 can be received through the device connector 101, and the received image signal can be output to the TV 410 through the signal input/output unit 102a (see a path (1) in FIG. 4). When a plurality of first source devices 310a and 310b are connected to the electronic apparatus 110, the processor 103 selects one of the first source devices and performs control to receive the image signal of the selected first source device.

Thus, a user of the TV can watch the image signal of the source device directly connected to the electronic apparatus.

The electronic apparatus 110 may also receive an image signal from the second source device 320, which is not directly connected to the electronic apparatus, and output the image signal to the TV 410. Specifically, the processor 103 of the electronic apparatus 110 performs control to receive the image signal of the second source device, which is output via the intermediation apparatus 200, through the signal input/output unit 102c, and output the received image signal of the second source device 320 the image signal to the TV 410 (see a path (2) in FIG. 4).

When there is a plurality of second source devices 320, and the number of signal input units 102c for receiving a signal from the intermediation apparatus 200 is greater than or equal to the number of second source devices 320, the signal may be received from each second source device. Otherwise, the processor 103 may receive the signal of at least one second source device among a plurality of second source devices in response to a user's input to the TV 410. In this case, the processor 103 may receive the signal corresponding to the user input through the signal input/output unit 102a connected to the TV 410.

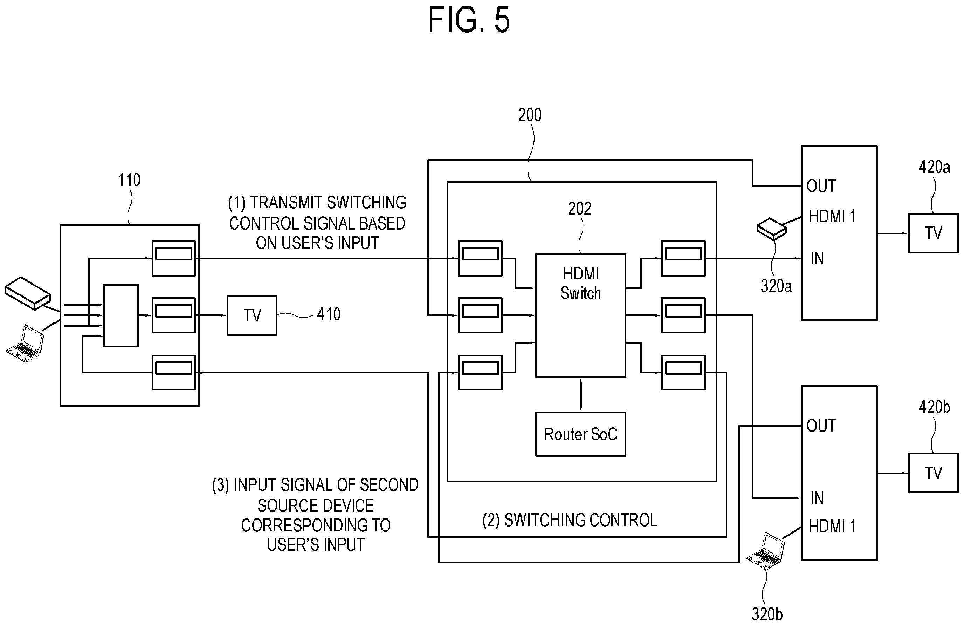

For example, as shown in FIG. 5, in a state that there is a plurality of second TVs 420a and 420b, which are not directly connected to the electronic apparatus 110, and the second source devices 320a and 320b are respectively one-to-one connected to the second TVs, when an image signal from one of the second source devices 320a and 320b is input to the electronic apparatus 110 (hereinafter, referred to as a 'first circumstance'), and a user's input for selecting one of the second source devices is received through the first TV 410 connected to the electronic apparatus 110, the processor 103 of the electronic apparatus 110 transmits a switching control signal based on the user's input to the intermediation apparatus 200 via the signal input/output unit 102b in response to the user's input to the TV 410 (see (1) in FIG. 5). Here, the switching control signal refers to a signal transmitted to the intermediation apparatus 200 and controlling the switch 202 of the intermediation apparatus 200, for example, a signal for switching connection between the signal input/output unit for receiving an image signal from the second TV 420a and the signal input/output unit for outputting the image signal to the electronic apparatus 110. When the electronic apparatus 110 and the intermediation apparatus 200 are connected by an HDMI interface, the switching control signal may be an HDMI consumer electronics control (CEC) signal. However, the switching control signal is not limited to the above embodiment. In response to the switching control signal received from the electronic apparatus 110, switching control (see (2) in FIG. 5) for the intermediation apparatus 200 is performed. Thus, the signal input unit 102c of the electronic apparatus 110 receives the signal of the second source device corresponding to the user's input from the intermediation apparatus 200 (see (3) in FIG. 5).

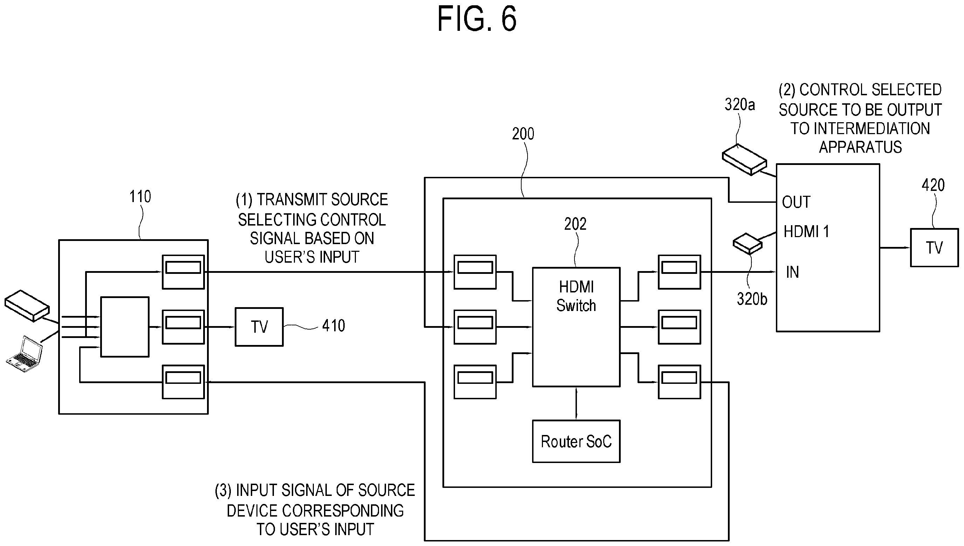

Alternatively, as shown in FIG. 6, in a state that the electronic apparatus 110 and the second TV 420 are switching-connected, but a plurality of second source devices 320a and 320b are connected to the second TV 420, when it is desired to input an image signal from one of the second source devices 320a and 320b to the electronic apparatus 110 (hereinafter, referred to as a 'second circumstance'), and a user's input for selecting one of these second source devices is received through the TV 410 connecting with the electronic apparatus 110, the processor 103 of the electronic apparatus 110 transmits a source selecting control signal based on the user's input to the second TV 420 via the intermediation apparatus 200 through the signal input/output unit 102b in response to the user's input to the TV 410 (see (1) in FIG. 6). Here, the source selecting control signal refers to a signal transmitted to the second TV 420 or the electronic apparatus connected to the second TV 420 and controlling the image signal from one of the second source devices 320a and 320b to be output to the intermediation apparatus 200. When the second TV 420 or the electronic apparatus connected to the second TV 420 connects with the second source devices 320a and 320b by the HDMI interface, the source selecting control signal may be the HDMI CEC signal. However, there are no limits to the source selecting control signal. In response to the received source selecting control signal, the second source device for an output from the second TV 420 to the intermediation apparatus 200 is selected (see (2) in FIG. 6). Therefore, the signal input unit 102c of the electronic apparatus 110 receives the signal of the second source device, which corresponds to the user's input, from the intermediation apparatus 200 (see (3) in FIG. 6).

Thus, a user of the TV can watch an image based on an image signal of the source device that is not directly connected to the electronic apparatus.

A combination situation of the first circumstance and the second circumstance (for example, a case where there is a plurality of second TVs, and there is a plurality of second source devices connected to the TVs) is also possible. In this case, the processor 103 of the electronic apparatus 110 may for example receive a signal of at least one second source device by combination of the processes in the first circumstance and the second circumstance.

Referring back to FIG. 4, the electronic apparatus 110 outputs an image signal of the first source device 310 directly connected thereto to the intermediation apparatus 200, so that the image signal can be transmitted to another electronic apparatus through the intermediation apparatus 200 (see a path (3) in FIG. 4).

A detailed structure, in which the electronic apparatus 110 outputs an image signal of the directly connected first source device 310 to the intermediation apparatus 200, will be described in more detail.

When one first source device 310 is connectable to the electronic apparatus 110, i.e. when only one source device is connectable to the device connector 101 of the electronic apparatus 110, the electronic apparatus 110 may have a transmission line structure in which an output signal of the first source device 310 is directly output to the intermediation apparatus 200 through the signal output unit 102b without separate control of the electronic apparatus 110.

When there is a plurality of first source devices 310a and 310b connected to the electronic apparatus 110, it may be controlled by the processor 103 of the electronic apparatus 110 or it may be selected by a control signal from the intermediation apparatus or the external electronic apparatus from which of the source devices the image signal is output to the intermediation apparatus 200.

For example, the processor 103 of the electronic apparatus 110 may perform control so that the signal can be output from one among the plurality of first source devices 310 to the intermediation apparatus 200 in response to a request from the intermediation apparatus 200 or the external electronic apparatus. For example, the processor 103 analyzes a second TV user's input for selecting one among the first source devices 310, which is received through the intermediation apparatus 200, and controls the signal to be output from the selected first source device 310 to the intermediation apparatus 200.

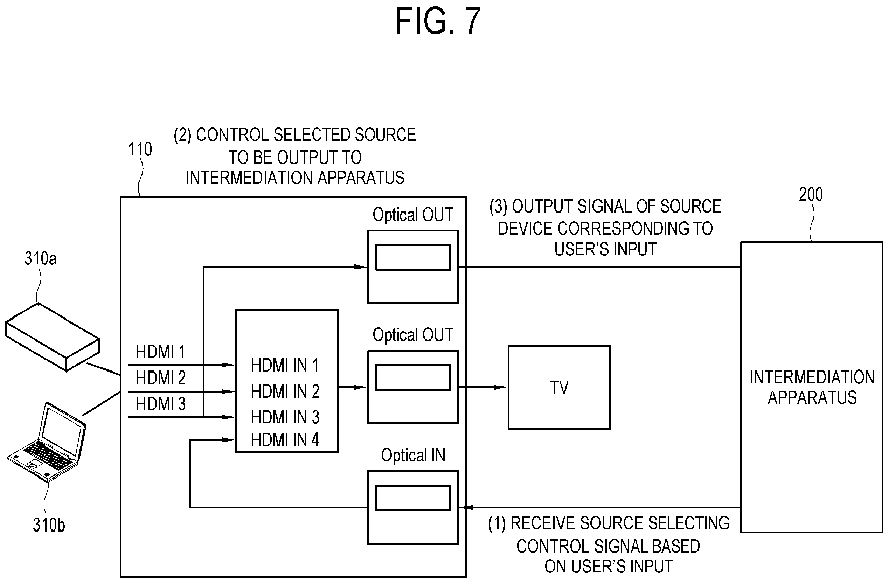

FIG. 7 shows this exemplary embodiment. When a user's input for selecting at least one of the first source devices 310a and 310b is received through the second TV 420 which is not directly connected to the electronic apparatus 110, the processor 103 of the electronic apparatus 120 connected to the second TV 420 transmits a source selecting control signal based on the user's input to the second TV 420 via the intermediation apparatus 200 in response to the user's input to the second TV 420. The processor 103 of the electronic apparatus 110 receives the source selecting control signal transmitted as above in response to the user's input (see (1) in FIG. 7). The processor 103 receives the control signal and controls a selected source to be output to the intermediation apparatus 200 via the signal input/output unit 102b (FIG. 7 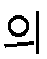 (2)). Thus, an image signal of a first source device corresponding to a user's input is output to the intermediation apparatus 200 (see (3) in FIG. 7).

Further, when a process for selecting the first source device 310 has been previously made, the processor 103 may control a signal of a previously selected first source device 310 to be output to the intermediation apparatus 200.

Alternatively, the signal of the first source device 310 may be output to the intermediation apparatus 200 in response to a control signal from the intermediation apparatus or the external electronic apparatus, without control from the processor 103 of the electronic apparatus 110. For example, when the source devices and the electronic apparatuses are connected by the HDMI interface, an image signal may be output from one first source device among the plurality of first source devices 310 to the intermediation apparatus 200 in response to an HDMI CEC control signal without the control from the processor 103 of the electronic apparatus 100. In this case, the HDMI CEC control signal is generated in the external electronic apparatus in accordance with a second TV user's selection, and transmitted to the electronic apparatus 110 via the intermediation apparatus 200.

Thus, an image of a source device is transmitted to and displayed on a TV not directly connected to the source device.

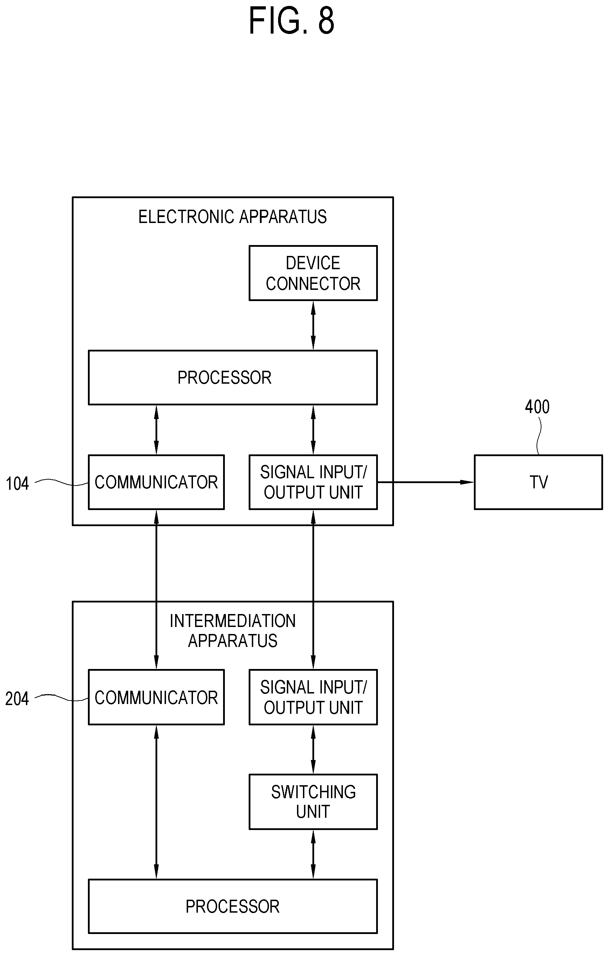

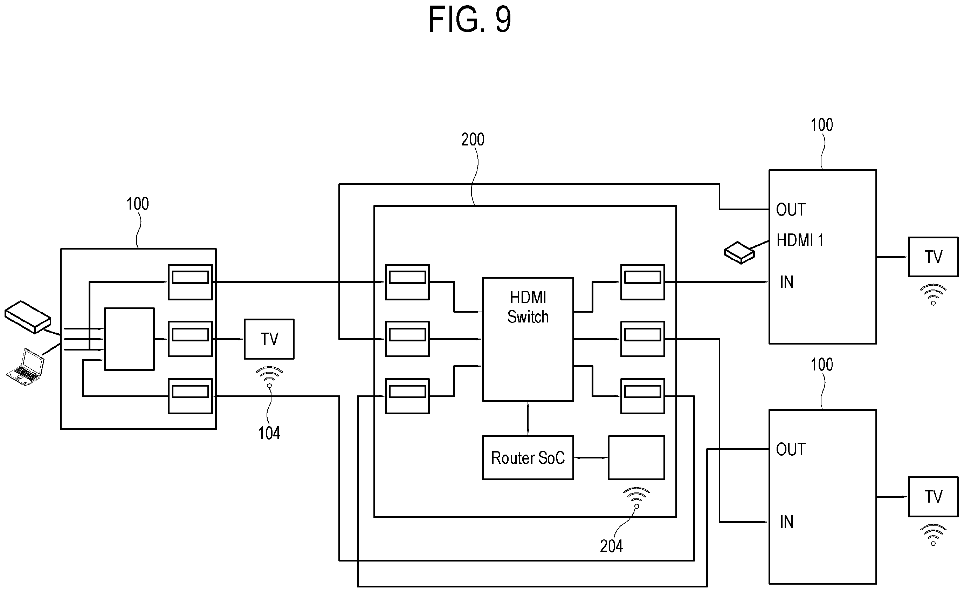

Meanwhile, the foregoing exemplary embodiment shows that the switching control signal or the source selecting control signal is transmitted between the electronic apparatus 100 and the intermediation apparatus 200 through the signal input/output unit like an image signal (hereinafter, referred to as the 'first exemplary embodiment'). However, the present inventive concept is not limited to this exemplary embodiment. For example, the electronic apparatus 100 and the intermediation apparatus 200 according to a second exemplary embodiment include communicators separately from the signal input/output units, and thus exchange a control signal with each other through the communicator. This exemplary embodiment will be described with reference to FIGS. 8 to 9.

According to the second exemplary embodiment, the electronic apparatus 100 and the intermediation apparatus 200 include the communicators 104 and 204, and transmit and receive a control signal for switching or selecting a source through the communicators 104 and 204. The communicators 104 and 204 may perform wired or wireless communication. Therefore, the communicators 104 and 204 may be achieved by various communication types as well as a connection unit including a connector or terminal for wired connection. For example, the communicators 104 and 204 may be configured to perform one or more communications among Wi-Fi, Wi-Fi Direct, Bluetooth, Bluetooth low energy (BLE), a serial port profile (SPP), Zigbee, Infrared communication, radio control, ultra-wide band (UWB), wireless universal serial bus (USB), and near field communication (NFC). The communicators 104 and 204 may be materialized in the form of a device, a S/W module, a circuit, a chip, etc.

When the electronic apparatus 100 and the intermediation apparatus 200 include the communicators 104 and 204, at least one among the switching control signal of FIG. 5, the source selecting control signal of FIG. 6, and the source selecting control signal of FIG. 7 may be transmitted through the communicators 104 and 204. For example, the switching control signal and the source selecting control signal described as above are generated in the form of not the HDMI CEC signal but a Wi-Fi communication packet and transmitted and received between the electronic apparatus 100 and the intermediation apparatus 200.

With this, it is possible to overcome the limits to the format or content of the control signal defined in an image signal transmission interface or protocol, and thus increase a degree of freedom in a control signal for the electronic apparatus 100 and the intermediation apparatus 200 corresponding operations of the apparatuses.

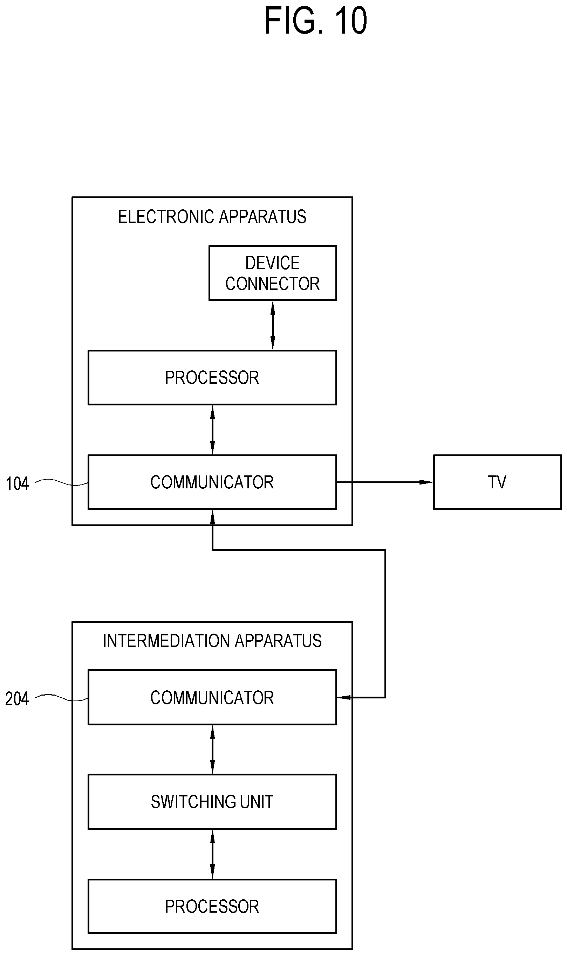

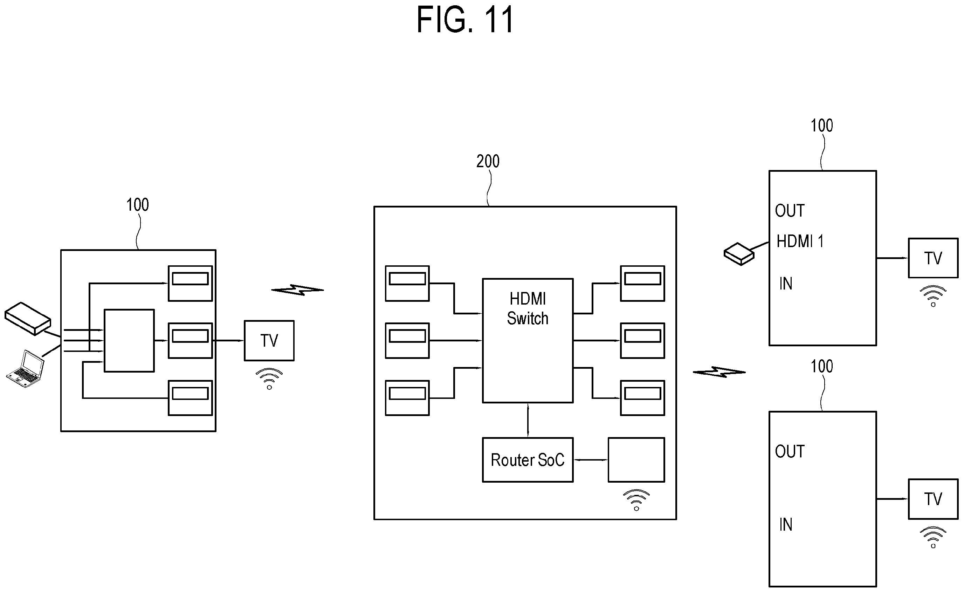

Meanwhile, according to an alternative exemplary embodiment, the communicator may be also used in transmitting and receiving an image signal as well as the control signal. That is, the electronic apparatus 100 and the intermediation apparatus 200 according to a third exemplary embodiment may use the communicators for transmitting and receiving both the image signal and the control signal. This exemplary embodiment will be described with reference to FIGS. 10 and 11.

According to the third exemplary embodiment, the electronic apparatus 100 and the intermediation apparatus 200 may transmit and receive a control signal for switching or source selection and an image signal to and from each other through the communicators 104 and 204 without the signal input/output units 102 and 203. That is, as shown in FIG. 11, the image signal may be output from the electronic apparatus 100 to the intermediation apparatus 200 and the image signal may be output from the intermediation apparatus 200 to the electronic apparatus 100 through the communicators 104 and 204. Each of the communicators 104 and 204 may include a first communicator for transmitting and receiving a control signal, and a second communicator for transmitting and receiving an image signal.

With this, it is possible to overcome the limits to the format and content of the control signal defined in the image signal transmission interface or protocol, thereby not only increasing a degree of freedom in the control signal and the corresponding operations of the apparatuses but also reducing costs to separately have the signal input/output unit.

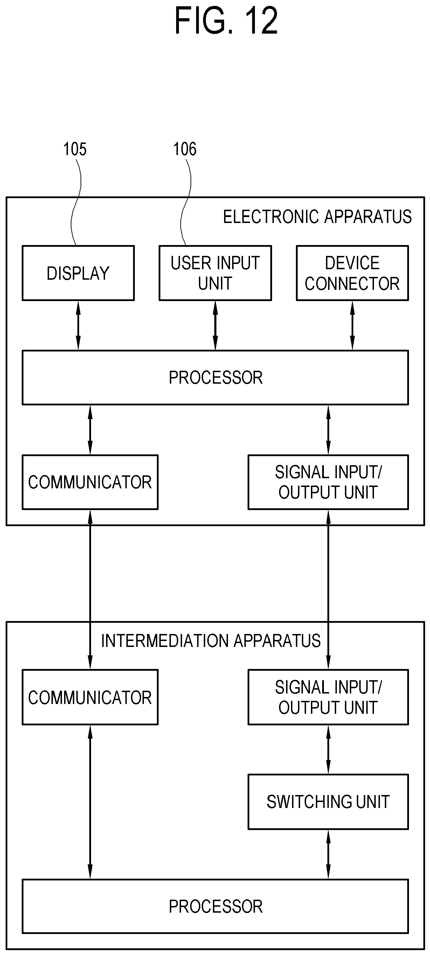

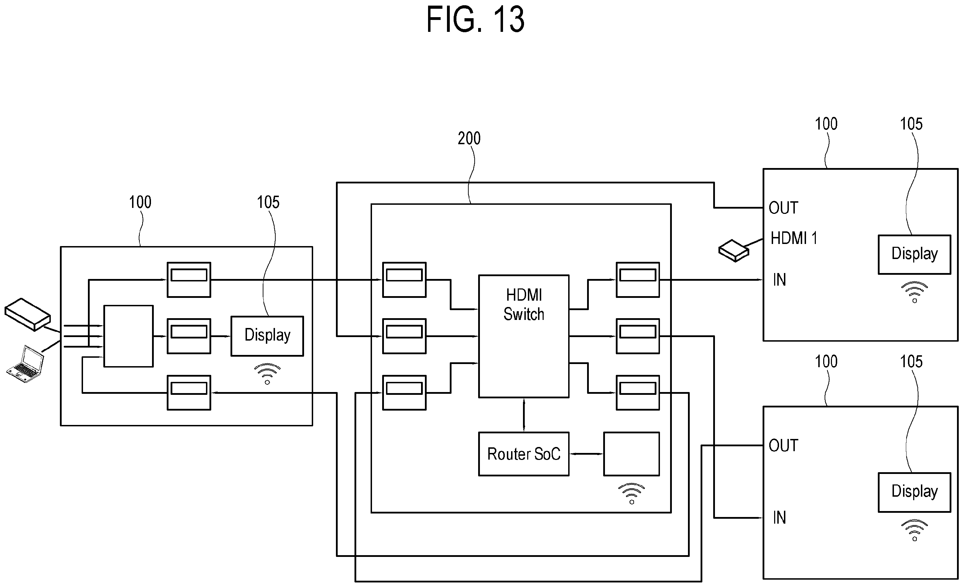

Meanwhile, the foregoing exemplary embodiment describes that the electronic apparatus 100 and the display apparatus 400 connected to the electronic apparatus 100 are materialized by the apparatuses separated from each other, but the present inventive concept is not limited to this exemplary embodiment. The electronic apparatus 100 according to a fourth exemplary embodiment may include a display 105, and may further include a user input unit 106. The fourth exemplary embodiment will be described with reference to FIGS. 12 and FIG. 13.

The electronic apparatus 100 according to the fourth exemplary embodiment may include the display 105. Thus, the electronic apparatus 100 is capable of displaying an image based on an image signal received from the first source device or the second source device through the display 105. The display 105 may for example be materialized by various display types such as liquid crystal, plasma, a light emitting diode (LED), an organic light emitting diode (OLED), a surface-conduction electron-emitter, a carbon nano-tube, nano-crystal, etc. without limitations. When the type of the display 105 is the liquid crystal, the display 105 includes a liquid crystal display (LCD) panel, a backlight unit for emitting light to the LCD panel, a panel driver for driving the LCD panel, etc. Besides, the display 105 may be materialized by a self-emissive OLED panel without the backlight unit.

The electronic apparatus 100 according to the fourth exemplary embodiment may further include the user input unit 106. Thus, the electronic apparatus 100 can select a second source device from which an image signal is received in the electronic apparatus 100 via the intermediation apparatus 200. The user input unit 106 may be variously achieved in accordance with a user's input methods. For example, the user input unit 106 may be materialized by a keyboard, a mouse, a touch screen, a touch pad, etc. and may also be materialized by a button installed on an outer side of the electronic apparatus, a remote-control signal receiver for receiving a remote-control signal corresponding to a user's input received from a remote controller, a camera for capturing a user's gesture input, a microphone for recognizing a user's voice input, etc. When the user input unit 106 includes a voice receiver for receiving a user's voice input, the voice receiver may directly or indirectly receive a voice signal.

The voice receiver may include the microphone or the like and directly receive the voice signal. In this case, the voice receiver converts an analog signal corresponding to a user's received voice command into a digital signal, and transmits the converted digital signal to the processor 103 so that voice recognition operations can be performed through a voice recognition module.

The voice receiver may indirectly receive a voice signal through a different apparatus. For example, the voice receiver may receive a voice command through the microphone provided in the remote controller. In this case, the remote controller converts an analog signal corresponding to the voice command received through the microphone into a digital signal, and transmits the converted digital signal to the voice receiver through the communicator or the like.

Here, the remote controller may be achieved by a remote controller application installed in a user terminal such as a smartphone, etc. That is, a user installs the remote controller application in the smartphone and remotely controls the electronic apparatus 100, in which a user's voice or the like input to the smartphone may be transmitted to the electronic apparatus 100 by the remote controller application. In this case, the smartphone may autonomously have a voice recognition function.

Meanwhile, when the voice command is received through the microphone provided in the remote controller, the electronic apparatus 100 may further include a communicator. For example, the remote controller or the smartphone may exchange data with the electronic apparatus 100 and control the electronic apparatus 100 through Wi-Fi, Bluetooth, infrared communication or the like communication method, and the electronic apparatus 100 may also include the communicator capable of supporting communication based on at least one of Wi-Fi, Bluetooth, and the infrared communication. When the electronic apparatus 100 is configured to communicate with another apparatus, e.g. a server in addition to the remote controller or the smartphone with the remote controller application, the communicator being in charge of communication with the server may be (e.g. an Ethernet modem) different from or (e.g. a Wi-Fi module) equal to the communicator being in charge of communication with the remote controller or the smartphone.

When the user input unit 106 includes the voice receiver for receiving a user's voice input, the processor 103 may process the voice signal received in the voice receiver. The voice signal may for example be processed and recognized by a voice recognition technique based on dynamic time warping (DTW), a voice recognition technique based on hidden Markov model (HMM), a voice recognition technique based on a rule-based approach, a voice recognition technique based on deep learning using a deep neural network (DNN), etc.

The processor 103 may make a received voice signal be transmitted to and processed in a voice recognition server. The voice recognition server may for example be materialized by a speech-to-text (STT) server. When the voice recognition server is materialized by the STT server, the voice recognition server may be a server for performing only the function of the STT server, or may be a server for performing other functions that the function of the STT server.

A voice signal transmitted to the voice recognition server is converted into data of a voice command (e.g. a text corresponding to a voice signal) under process of the server. The data of the voice command processed by the voice recognition server may be returned to the processor 103 or transmitted to another server.

The processor 103 may use the data obtained by autonomously processing the received video signal or data of the voice command processed in the voice recognition server, thereby performing a corresponding function. While performing the function corresponding to the data obtained by processing the voice signal, the processor 103 may employ the voice recognition server or another server. For example, the processor 103 makes the text corresponding to the voice signal, received in the STT server, be transmitted to and processed in the STT server or another server, and then performs a specific function based on the data processed in and received from the server.

The processor 103 may transmit information about the function of the electronic apparatus 100, which corresponds to the text converted from the voice signal, to the voice recognition server or another server. Therefore, the voice recognition server or another server stores information about functions corresponding to voice recognition results in a storage, and transmits the information to the electronic apparatus 100 so that the corresponding function can be implemented with reference to the stored information when an equivalent voice command is received in the future.

Specifically, the electronic apparatus 100 according to the fourth exemplary embodiment may be materialized by the display apparatus. In this case, the display apparatus may include the display 105; the device connector 101 to which at least one first source device 310 is connectable; the signal input/output unit 102 which outputs the signal of the first source device 310 to a different display apparatus or receive a signal of at least one second source device 320 connected to the different display apparatus through the intermediation apparatus 200; the user input unit 106 which receives a user's input; and the processor 103 which transmits the information of the first source device 310 to the intermediation apparatus 200, controls the signal of the first source device 310 to be output through the signal input/output unit 102, receives the information of the second source device 320 from the intermediation apparatus 200, receives the signal of the second source device 320 through the signal input/output unit 102 in response to the user's input based on the received information, and controls the display 105 to display an image based on the received signal.

With this, in terms of realizing the present inventive concept, an overall configuration is simplified since there are no needs of separately providing the electronic apparatus and the display apparatus.

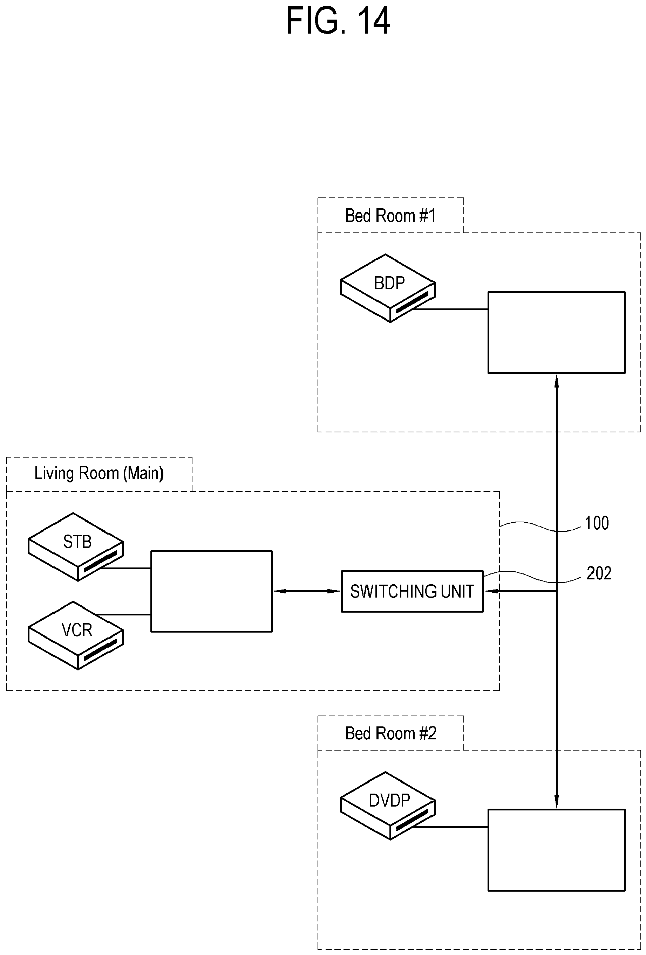

Meanwhile, the foregoing exemplary embodiment shows that the electronic apparatus 100 and the intermediation apparatus 200 connected thereto are materialized by apparatuses separated from each other, but the present inventive concept is not limited to this embodiment. That is, the electronic apparatus 100 according to a fifth exemplary embodiment includes a switching unit 202, and functions as the intermediation apparatus 200 in addition to the function of the electronic apparatus 100. This exemplary embodiment will be described with reference to FIG. 14.

The electronic apparatus 100 according to the fifth exemplary embodiment may include the switching unit 202. For example, as shown in FIG. 14, when the electronic apparatus 100 located in the living room includes the switching unit 202, the electronic apparatus 100 located in a place other than the living room, for example, the bed room #1 or the bed room #2 transmits or receives an image signal and/or a control signal to and from the electronic apparatus 100 located in the living room as connected to the electronic apparatus 100 located in the living room by a wire or wirelessly unlike the foregoing exemplary embodiment where the image signal and/or the control signal is transmitted and received as the electronic apparatus 100 is connected to the separately provided intermediation apparatus 200 by a wire or wirelessly, thereby implementing the functions of the foregoing exemplary embodiment.

Specifically, the electronic apparatus 100 according to the fifth exemplary embodiment may be materialized by the display apparatus. In this case, the display apparatus may include the display 105; the user input unit 106 which receives a user's input; the signal input/output unit 102 through which a signal is input and output between the plurality of display apparatuses connectable with at least one source device; and the processor 103 which transmits information of the first source device 310 connected to the first display apparatus among the plurality of display apparatuses to the second display apparatus, controls the signal input/output unit 102 to output the signal of the first source device 310 to the second display apparatus in response to a request of the second display apparatus, controls the signal input/output unit 102 to input the signal of the source device connected to the first display apparatus or the second display apparatus in response to the user's input based on the information of the first source device 310 or the information of the second source device 320 connected to the second display apparatus, and controls the display 105 to display an image based on the input signal.

With this, in terms of realizing the present inventive concept, an overall configuration is simplified since there are no needs of separately providing the intermediation apparatus.

Below, operation and use scenarios of the electronic apparatus 100 will be described in more detail according to an exemplary embodiment.

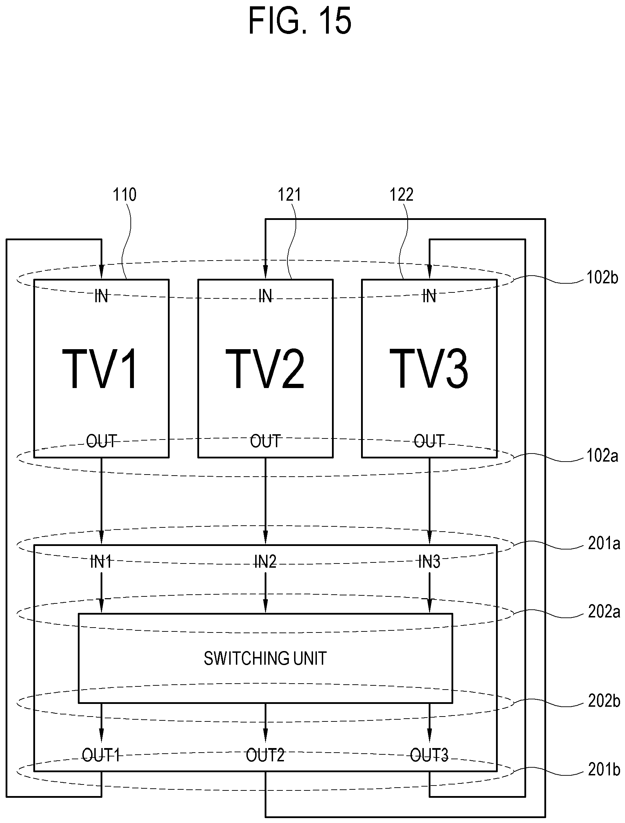

FIG. 15 illustrates an example of connection between the switching unit 202 and the signal input/output unit 102, 201 of the intermediation apparatus 200 and the electronic apparatus 100 according to one exemplary embodiment.

According to this exemplary embodiment, the signal output unit 102a of each electronic apparatus 100 is connected to one among the signal input units 201a of the intermediation apparatus 200, and each signal output unit 201b of the intermediation apparatus 200 is connected to the signal input unit 102b of the electronic apparatus 100. Further, each signal input unit 201a of the intermediation apparatus 200, connected to the signal output unit 102a of each electronic apparatus 100, is connected to the signal input unit 202a of the switching unit 202. In addition, each signal output unit 201b of the intermediation apparatus 200, connected to the signal input unit 102b of each electronic apparatus 100, is connected to the signal output unit 202b of the switching unit 202. With this, only the switching operation in the switching unit 202 is enough to make a signal output from another electronic apparatus 100 be input to each electronic apparatus 100, or a signal output from each electronic apparatus 100 be input to another electronic apparatus 100. Below, for convenience of description, signal input units for inputs from a TV1 110, a TV2 121 and a TV3 122 to the intermediation apparatus 200 will be respectively called an IN1, an IN2, and an IN3, and signal output units for outputs from the intermediation apparatus 200 to the TV1 110, the TV2 121 and the TV3 123 will be respectively called an OUT1, an OUT2, and an OUT3. FIG. 15 shows an example that the switching unit 202 for the switching operation is materialized by a hardware switch. However, the switching unit 202 according to an exemplary embodiment is not limited to the hardware switch, but may be materialized by software as described above.

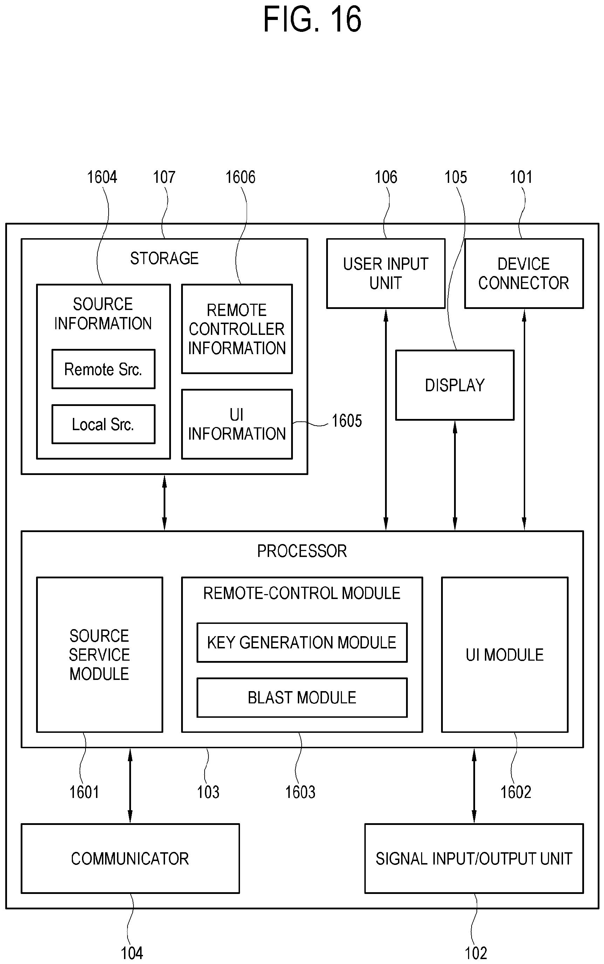

FIG. 16 illustrates a detailed configuration of the electronic apparatus 100 according to one exemplary embodiment. In particular, FIG. 16 shows details of the fourth exemplary embodiment where the electronic apparatus 100 further includes the display 105 and the user input unit 106. Further, the electronic apparatus 100 of FIG. 16 also includes a storage 107.

The processor 103 of the electronic apparatus 100 according to one exemplary embodiment may include a source service module 1601, a user interface (Ul) module 1602, and a remote-control module 1603.

The source service module 1601 updates source information about a first source device or a second source device from which the electronic apparatus 100 can receive an image signal, and processes the source information to be transmittable to the UI module, thereby informing the UI module of the source information.

The UI module 1602 makes the source information received from the source service module 1601 be formed as a UI and displayed on the display 105. The UI module 1602 may also display whether the source device is in use or out of use, and information about the electronic apparatus 100 using the source device when the corresponding source device is in use.

The remote-control module 1603 generates a remote-control signal for controlling the source device. The remote-control module may include a key generation module 1603a and a blast module 1603b. When a user makes a remote-control input while using a specific source device, the key generation module 1603a may generate a corresponding control key. The blast module 1603b transmits a control key, which corresponds to a control key received from an external electronic apparatus 100, to a source device connected thereto in response to the received control key. Detailed descriptions will be made later.

According to one exemplary embodiment, the electronic apparatus 100 may further include a storage 107.

Under process and control of the processor 103, the storage 107 may be configured to store various pieces of data, for example, source information 1604, UI information 1605, and remote controller information 1606. The source information 1604 may include information about a list of first source devices or second source devices from which the electronic apparatus 100 can receive the image signal. The UI information 1605 may include information about an image or the like needed for representing the source information in the form of the Ul. The remote controller information 1606 may include keyset information of the remote controller which correspond to the source devices. The source information 1604, the UI information 1605, and the remote controller information 1606 may be stored as a separated form or a single database (DB) form.

The storage 107 may be accessed by the processor 103 and perform reading, recording, modifying, updating, etc. with regard to the data. The storage 107 may include a flash memory, a hard-disc drive (HDD), a solid-state drive (SSD), and the like nonvolatile memory in which data is retained regardless of whether system power is supplied to the display apparatus 100 or not. Further, the storage 107 may include a buffer, a random-access memory (RAM), and the like volatile memory in which data to be processed by the processor 103 is temporarily loaded.

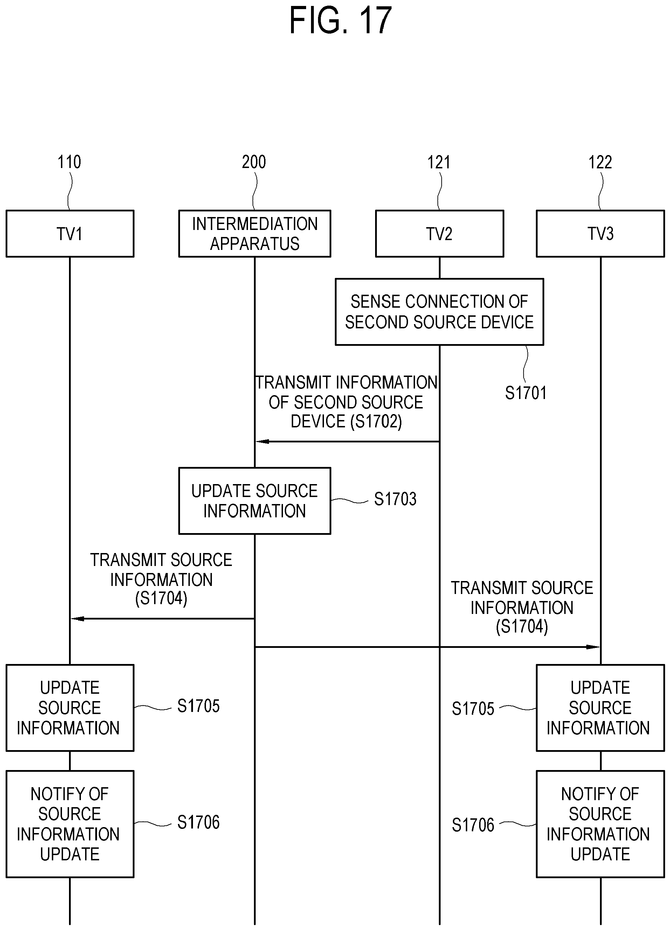

FIG. 17 illustrates operations of the electronic apparatus 100 and the intermediation apparatus 200 when the source device is connected to the electronic apparatus 100 according to one exemplary embodiment. Below, for convenience of description, the electronic apparatuses 100 will be respectively called the TV1 110, the TV2 121, and the TV3 123 based on the exemplary embodiment where the electronic apparatus 100 includes the display 105, and it will be assumed that these electronic apparatuses are respectively located at different places and communicate with each other through a home network.

When a new source device is connected to the TV2 121, the processor 103 of the TV2 121 senses the connection (S1701). After sensing the connection, the processor 103 of the TV2 121 transmits information about the corresponding source device to the intermediation apparatus 200 (S1702). Here, the information about the source device includes information about the electronic apparatus connecting with the corresponding source device in addition to the information for identifying the corresponding source device itself. In a case of FIG. 17, the information about the source device includes information about the TV2 121. The information about the source device may further include keyset information of the remote controller corresponding to the source device or an image file to be used in displaying the source device on the Ul.

The intermediation apparatus 200, which receives information of the source device connected to the TV2 121 from the TV2 121, updates the source information stored in the intermediation apparatus 200 (S1703). Thus, the intermediation apparatus 200 stores information about the electronic apparatuses connected to the intermediation apparatus, and information about the source devices connected to the electronic apparatuses, and keeps the information up to date.

Then, the processor 203 of the intermediation apparatus 200 transmits the source information to even other electronic apparatuses, e.g. the TV1 110 and the TV3 123 (S1704), storing and keeping an up-to-date list of electronic apparatuses connected to the whole home network and source devices connected to the electronic apparatuses.

Each of the TV1 110 and the TV3 123, which receive the source information from the intermediation apparatus 200, updates the source information (S1705), and notifies that the source information is updated, in accordance with settings (S1706).

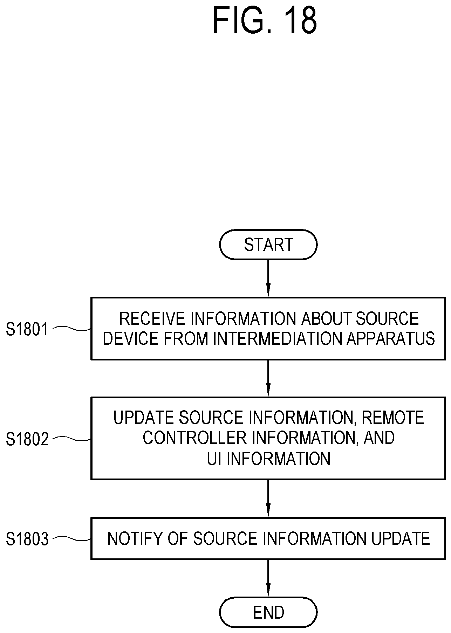

FIG. 18 illustrates an example of a process that the electronic apparatus 100 updates source information received from the intermediation apparatus 200;

FIG. 18 illustrates an example of a source information update process performed in the electronic apparatus 100 that receives the source information from the intermediation apparatus 200.

The processor 103 of the electronic apparatus 100, e.g. the TV1 110 receives information about the source device from the intermediation apparatus 200 (S1801), and updates the source information, the remote controller information, and the UI information (S1802) in response to the received information. Thus, the TV1 110 can keep the up-to-date states of the information about source devices connected on a home network, information about the electronic apparatuses directly connecting with the source devices, remote-controller keyset information corresponding to each source device, information needed for representing each source device on a Ul, and the like information. In accordance with settings, the processor 103 may notify of the source information update (S1803).

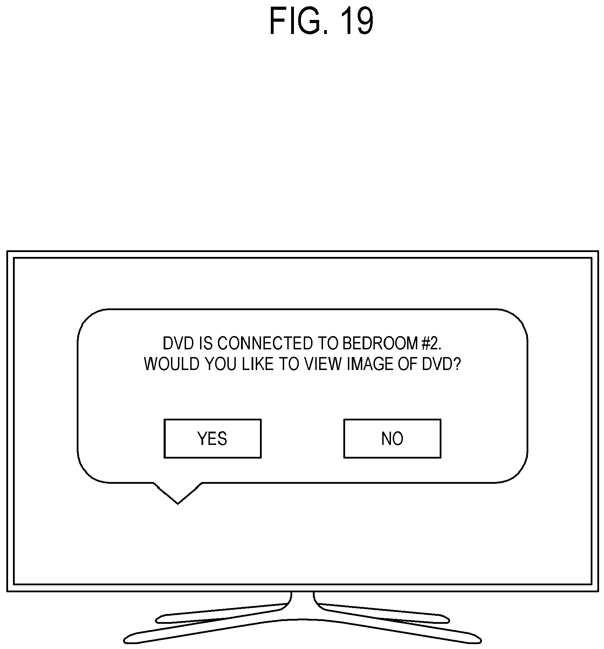

FIG. 19 illustrates an example of the electronic apparatus 100, a display screen of which notifies of the source information update.

The processor 103 of the electronic apparatus 100, which has received the source information from the intermediation apparatus 200 and performed the source information update process, may inform a user that a new source device is connected to one among the electronic apparatuses on the home network, through the display 105, for example, as shown in FIG. 19. With this, a user has a chance to select whether to watch an image of a new source device immediately after the new source device is connected to the home network.

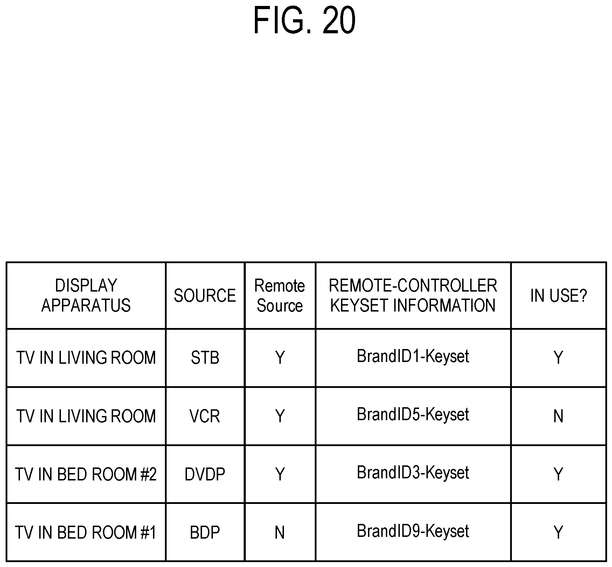

FIG. 20 illustrates an example of the source information stored in the electronic apparatus 100 and the intermediation apparatus 200.

The source information includes information about a list of image source device present in the home network. For example, as shown in FIG. 20, the source information includes the names of the source devices, the names of the electronic apparatuses or display apparatuses directly connecting with the source devices, information about whether the source device is directly connected to the electronic apparatus (hereinafter, referred to as a 'local source') or the source device is not directly connected to the electronic apparatus (hereinafter, referred to as a 'remote source') in terms of the electronic apparatus currently storing the source information, keyset information about the remote controller corresponding to a current source device, and information about whether the corresponding source device is in use or out of use by the electronic apparatus. However, the configuration and content of the source information are not limited to those of this exemplary embodiment.

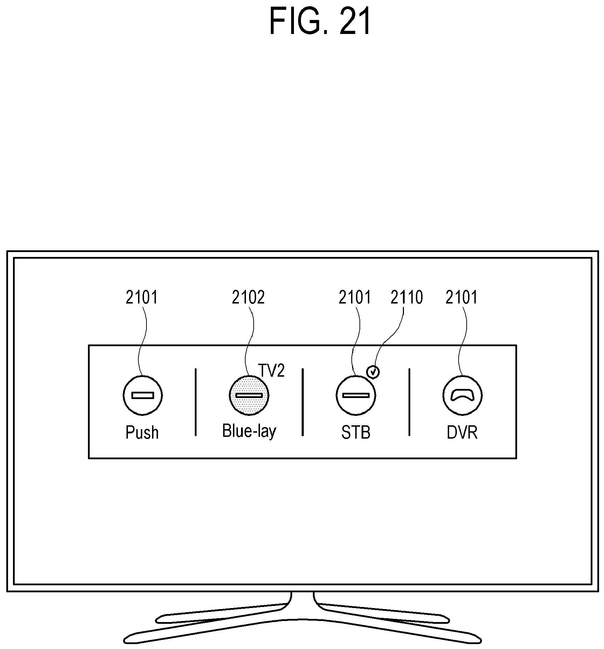

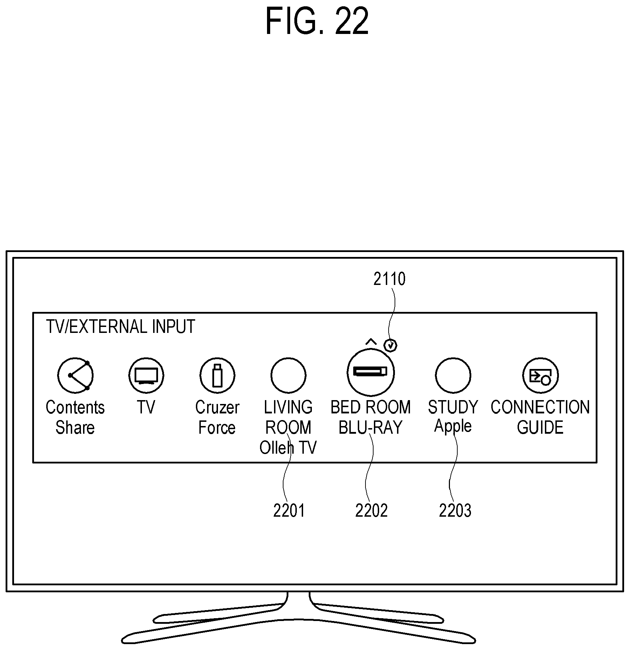

FIGS. 21 and 22 illustrate examples of a UI that displays a source list.

The electronic apparatus 100 displays source information stored therein on the Ul. For example, when a user's input for changing the source device, from which an image signal will be provided, is received through the user input unit 106 of the electronic apparatus 100, the processor 103 of the electronic apparatus 100 may display a list of sources available on the home network through in the form of a selectable UI.

The source information stored in the electronic apparatus 100 includes information about not only the source devices directly connected to the electronic apparatus 100 but also source devices from which image signals are receivable through the intermediation apparatus 200 even though the source devices are not directly connected to the electronic apparatus 100. Therefore, the processor 103 of the electronic apparatus 100 displays both the source devices directly connected to the electronic apparatus 100 (i.e. the 'first source devices') and the source devices that are not directly connected to the electronic apparatus 100 (i.e. the 'second source device'). In this case, the processor 103 may make the first source devices and the second source devices be displayed distinguishably or indistinguishably from each other. As an example of displaying the first source device and the second source device distinguishably from each other, the processor 103 may use image information to distinguish between the first source device and the second source device. For example, as shown in FIG. 21, the first source devices 2101 may be displayed brightly and the second source device 2102 may be displayed darkly to distinguish between them. Alternatively, for example, as shown in FIG. 22, the processor 103 may use text information with regard to each second source device, to distinguish between the source devices by representing the locations of the source devices and the locations of the electronic apparatuses, to which the source devices are directly connected, with text information 2201-2203. Further, the processor 103 may display an icon 2110 for indicating a source device, which is in use, in the list of source devices.

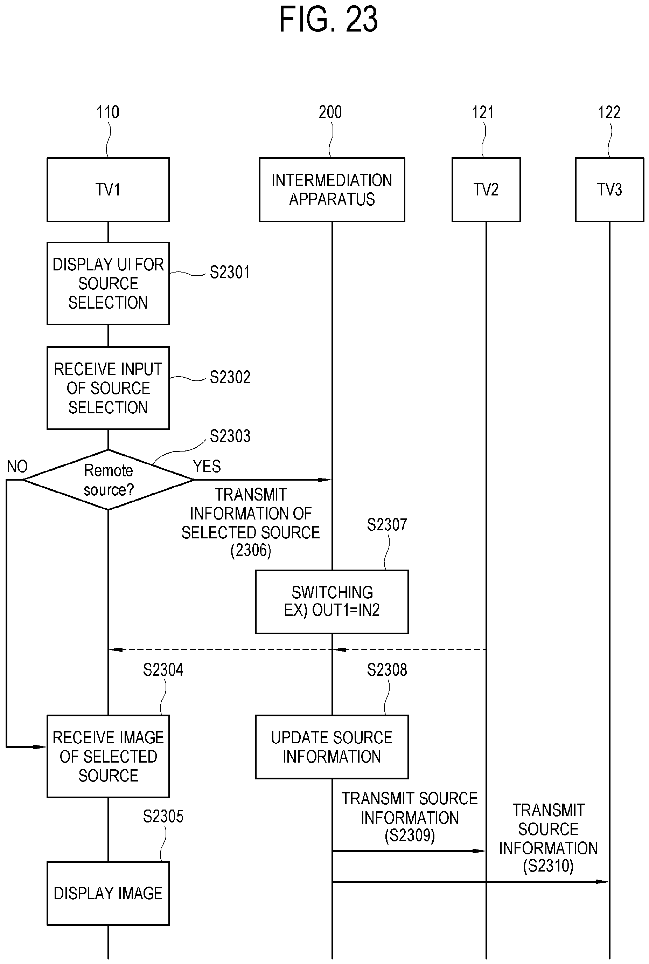

FIG. 23 illustrates operations of the electronic apparatus 100 and the intermediation apparatus 200 when one source is selected in the UI on which a source list is displayed.

The processor 103 of the TV1 110 displays a source list UI on the display 105 in response to a user's input for changing the source device (S2301), and receives a user's input for selecting a source (S2302). In response to the user's input for selecting the source, the processor 103 determines whether the selected source is the local source directly connected to the TV1 110 or the remote source not directly connected to the TV1 110 on the basis of the source information stored in the storage 107 (S2303). When the selected source device is not the remote source but the local source directly connected to the TV1 110, the processor 103 of the TV1 110 performs control to receive an image signal from the selected source (S2304), and displays an image based on the received image signal on the display 105 (S2305).

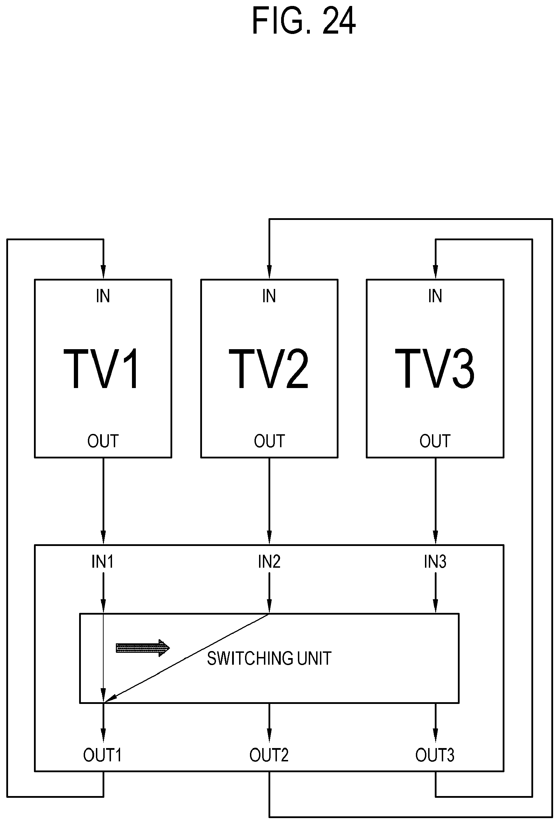

On the other hand, when the selected source device is the remote source, a switching operation has to be performed to make the image signal of the corresponding source be output to the TV1 110 via the intermediation apparatus 200 so that the TV1 110 can receive the image signal of the corresponding source. As an example of the switching operation, the processor 103 according to the first exemplary embodiment transmits a switching control signal to the intermediation apparatus 200 through the signal input/output unit 102 of the TV1 110, and controls the switching unit 202 of the intermediation apparatus 200 on the basis of the switching control signal. According to the second exemplary embodiment, the processor 103 transmits the switching control signal to the intermediation apparatus 200 through the communicator 104 and controls the switching unit 202 of the intermediation apparatus 200 on the basis of the switching control signal. Alternatively, the processor 103 of the TV1 110 may transmits source information selected by a user to the intermediation apparatus 200 (S2307). In this case, the processor 203 of the intermediation apparatus 200 may autonomously generates the switching control signal, which makes the image signal of the corresponding source device be output to the TV1 110, from the received information, i.e. the source information selected by a user, thereby controlling the switching unit 202. For example, when a user of the TV1 110, who is watching the image of the source device connected to the TV1 110, selects the source device connected to the TV2 121 on a source list UI in the circumstance where each electronic apparatus and the switching unit are connected by the structure shown in FIG. 15, the processor 203 of the intermediation apparatus 200 receives information about the selected source device and switches over from connection between IN1 and OUT1 to connection between IN2 and OUT1 as shown in FIG. 24 so that the image signal of the source device connected to the TV2 121 can be output to the TV1 110.

After the switching unit is completely controlled according to a user's selection, the TV1 110 receives an image signal of the selected source (S2304), and displays an image based on the received image signal through the display 105. Because use information or the like about the corresponding source device has been changed as the source device selected by a user is used in the TV1 110, the processor 203 of the intermediation apparatus 200 updates the source information (S2308), and transmits information about the update to the other electronic apparatuses, i.e. the TV2 121 and the TV3 123 so that the source information can be updated in the corresponding electronic apparatuses (S2309, S2310).

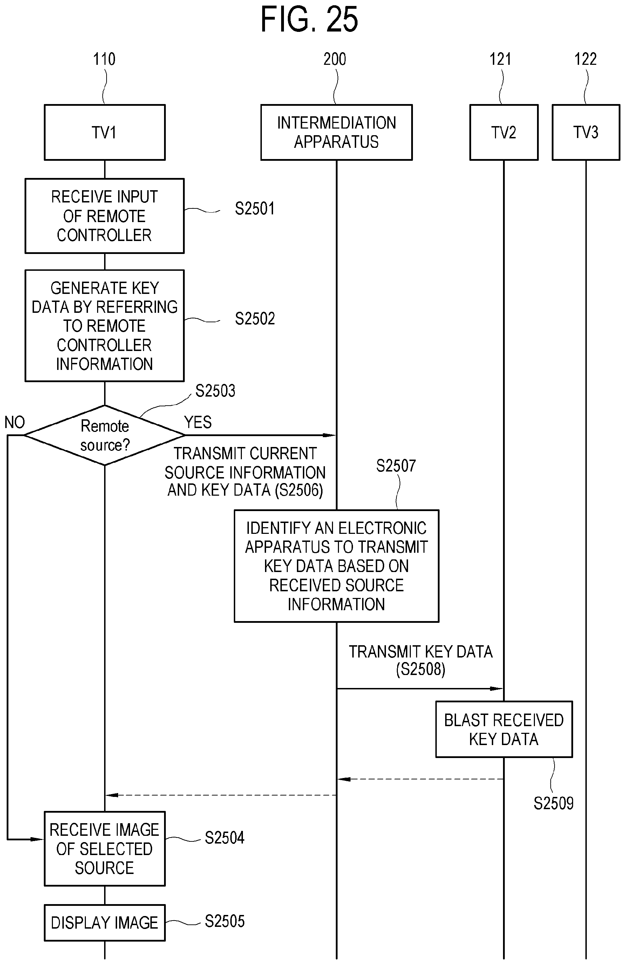

FIG. 25 illustrates operations of the electronic apparatus 100 and the intermediation apparatus 200 when a user who is watching an image of a source device on the electronic apparatus 100 makes an input for controlling the source device through a remote controller.

When a user inputs a control command for controlling a certain source device through the remote controller while the electronic apparatus 100 is displaying an image on a screen of the corresponding source device, the processor 103 of the TV1 110 receives the input of the remote controller (S2501). Further, the processor 103 generates key data corresponding to a corresponding user input with reference to the remote-controller keyset information corresponding to each individual source device (S2502).

The processor 103 determines whether the currently using source is the local source directly connected to the TV1 110 or the remote source not directly connected to the TV1 110 on the basis of the source information stored in the storage 107 (S2503). When the currently using source is not the remote source, the selected source device is the local source directly connected to the TV1 110, and therefore the processor 103 of the TV1 110 transmits key data corresponding to the control command issued by the user to the source device so that the source device can be controlled, thereby receiving an image signal output as results of the control (S2504) and displaying an image based on the image signal through the display 105 (S2505).

When the currently using source is the remote source, the key data corresponding to the control command issued by the user has to be transmitted to the source device targeted for control.

As an example of transmitting the key data corresponding to the control command input by the user to the source device targeted for control, the processor 103 of the TV1 110 according to the first exemplary embodiment may transmit a control signal corresponding to the key data, e.g. an HDMI CEC signal to an electronic apparatus 121 targeted for control or a source device targeted for control through the signal output unit. Since the electronic apparatus 110 is receiving and displaying an image of the source device targeted for control at that time when the input to the remote controller is made, the electronic apparatus 110 and the source device targeted for control are being connected through the intermediation apparatus 200. Therefore, the processor 103 of the TV1 110 may directly transmit the HDMI CEC signal corresponding to the key data to the electronic apparatus 121 targeted for control or the source device targeted for control, thereby controlling the electronic apparatus 121 or the source device. In this case, the source device targeted for control is directly controlled in response to a control signal, and therefore the source device targeted for control is controllable even when an element irrelevant to transmission of the control signal among the display apparatus 400 and the electronic apparatus 121 directly connected to the source device targeted for control, for example, the display 105 is powered off.

As another example, when the control signal corresponding to the key data is the HDMI CEC signal in the second exemplary embodiment, it is the same as the foregoing exemplary embodiment except that the signal is transmitted through not the signal input/output unit but the communicator.

On the other hand, when the control signal corresponding to the key data is not the HDMI CEC signal, there is a need of generating and transmitting a separate control signal from the TV2 121 directly connecting with the source device targeted for control to the source device targeted for control. For example, in response to the key data received from the TV1 110, the TV2 121 may blast a remote-control signal so that the remote-control signal can be generated corresponding to the received key data.

Meanwhile, when a currently using source is the remote source, and the switching unit 202 of the intermediation apparatus 200 is materialized by a software switch, the intermediation apparatus 200 has to perform a process for determining the electronic apparatus 100 to which the generated key data will be transmitted, because the TV1 110 and the source device targeted for control are not physically connected even though an image signal is being currently received from the source device targeted for control.

Referring back to FIG. 25, detailed operations will be described. When the source device targeted for control is determined as the remote source (S2503), the processor 103 of the TV1 110 transmits information of a currently using source device and key data corresponding to a user control command for the source device to the intermediation apparatus 200 (S2506). Then, the intermediation apparatus 200 determines the electronic apparatus 100, to which the received key data will be transmitted, on the basis of the received source information (S2507), and transmits the key data to the determined electronic apparatus (S2508). When the key data is transmitted to the determined electronic apparatus, the target electronic apparatus receives the key data and transmits the remote-control signal corresponding to the received key data to the source device targeted for control. For example, the TV2 121 which receives the key data may blast the remote-control signal to the source device targeted for control (S2509). Through the foregoing processes, when the second source device is controlled by the remote-control signal, the processor 103 of the TV1 110 receives an image signal controlled under control of the input remote controller (S2504) and displays an image based on the image signal on the display 105 (S2505).

Meanwhile, the foregoing exemplary embodiment shows that the TV1 110, which has received a remote control input, generates and transmits the keyset data based on a remote-control keyset information corresponding to the source device targeted for control, but the present inventive concept is not limited to this exemplary embodiment. For example, the processor 103 transmits only the information about the key itself of the remote controller input by a user to the electronic apparatus connecting with the source device targeted for control, i.e. to the TV2 121, and the processor of the TV2 121 may generate the key data corresponding to the key with reference to the keyset information to thereby control the source device.

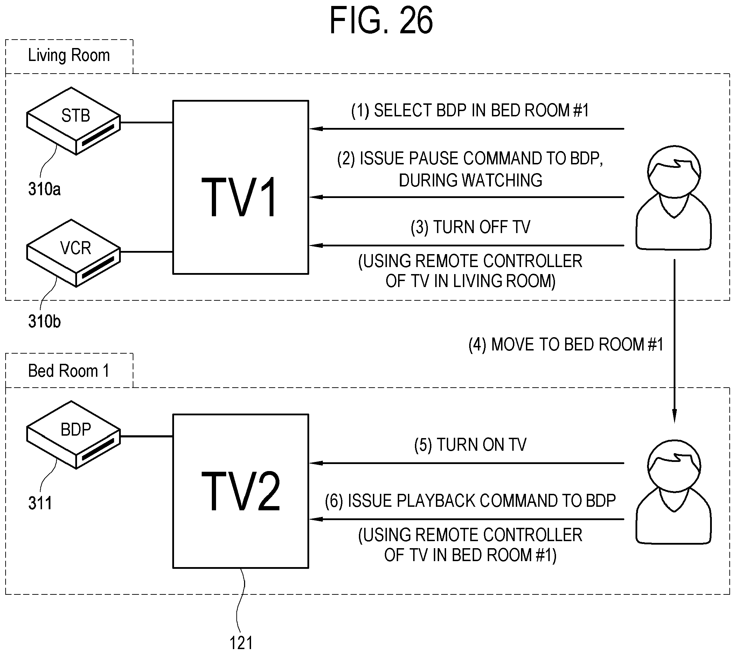

FIG. 26 illustrates an example of a scenario that a user uses the electronic apparatuses 100 according to one exemplary embodiment.

A user who is in the living room presses a source device switching menu button (for example, an external input switching button or the like) on a TV remote controller while watching an image provided from an STB 310a through the TV1 110 connecting with image source devices such as the STB 310a and a VCR 310b so that a UI of a source list can be displayed, and then selects a source, i.e. a BDP 311 located in a bed room #1 from the displayed source list (see (1) in FIG. 26). Thus, a user who is in the living room can watch an image provided from the BDP 311 located in the bed room #1 through the TV 110 located in the living room.

According to one exemplary embodiment, the image that has been being displayed can be seen seamlessly even though a user moves to another place. Further, the image can be seen without any loss even though it takes some time during the movement. For example, when a user wants to continuously view the image from the BDP 311 at another place, e.g. the bed room #1, the user issues a pause command to the BDP 311 through the remote controller for the TV 110 located in the living room (see (2) in FIG. 26), turns off the TV 110 located in the living room (see (3) in FIG. 26), and moves to the bed room #1 (see (4) in FIG. 26). Then, a user turns on the TV 121 located in the bed room #1 through the remote controller for the TV 121 (see (5) in FIG. 26), selects the BDP 311 directly connected to the TV 121 located in the bed room #1, and issues a command for resuming the playback of the image (see (6) in FIG. 26). With this, the image of the BDP 311, which has been being displayed through the TV 110 located in the living room, can be resumed from a paused point through the TV 121 located in the bed room #1, and therefore a user can continuously view the image at another place. Although it takes some time during the movement, the image can be seamlessly played back without any loss.

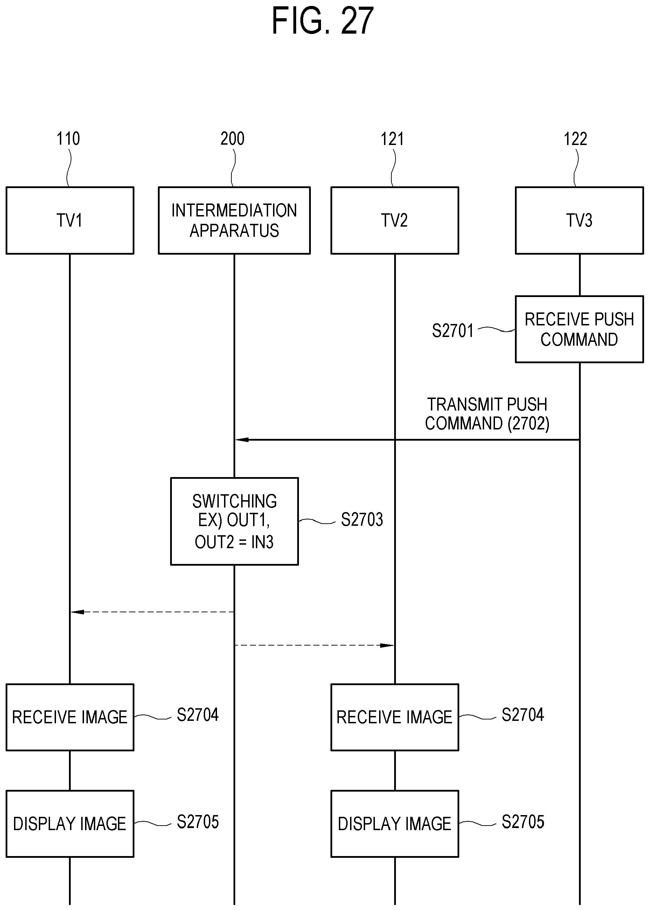

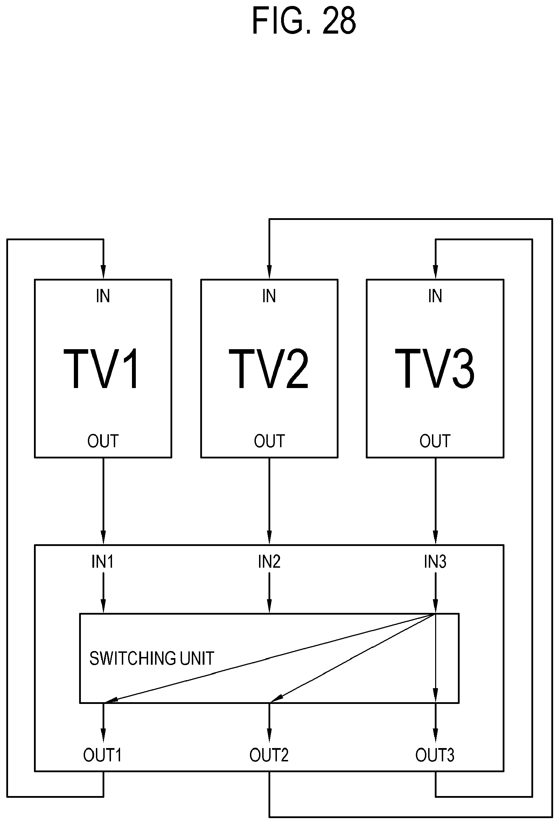

FIGS. 27 and 28 illustrate operations of the electronic apparatus 100 and the intermediation apparatus 200 when the electronic apparatus 100 functions in a push mode according to one exemplary embodiment.

The push mode refers to a function that an image being played back in one TV is played back in all display apparatuses connected in the home network. Specifically, for example, when a user's push command is issued to the processor 103 of the TV 123 that plays back an image signal received from a source device (S2701), the processor 103 transmits the received push command to the intermediation apparatus 200 (S2702). The intermediation apparatus 200 receives the push command and controls the switching unit 202 so that an image signal output from the electronic apparatus, i.e. the TV3 123, from which the push command is transmitted, and input to the intermediation apparatus 200 can be output to all the electronic apparatuses connected to the intermediation apparatus 200, for example, so that IN3 can be connected to all of OUT1, OUT2 and OUT3 as shown in FIG. 28. Therefore, all the electronic apparatuses 100 can receive and display the image signal transmitted from the TV3 123 through the intermediation apparatus 200 (S2704 and S2705). Specifically, a broadcast signal among HDMI CEC signals may for example be employed as the push command.

With this, an image being played back in one display apparatus can be played back in all the display apparatuses connected to a home network.

As described above, according to an exemplary embodiment, a user can control the image source device as if all the image source devices present in home are directly connected to the display apparatus being currently used by the user.

Further, according to an exemplary embodiment, it is possible to solve a limit to a spatial layout for the image source devices in an environment where the image source devices are shared.

Further, according to an exemplary embodiment, it is possible to share the image source device without a separate hub apparatus for connecting with the image source device or a separate receiver for receiving a signal from the hub apparatus.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. An electronic apparatus comprising:
a device connector structured to connect with at least one first source device;
a signal input/output structured to output a signal of the at least one first source device to an intermediation apparatus and a display apparatus, or receive a signal of at least one second source device through the intermediation apparatus; and
a processor configured to control the signal of the at least one second source device that is received through the intermediation apparatus to be input through the signal input/output and control the input signal of the at least one second source device to be output to the display apparatus in response to an input of a user through the display apparatus.

2. The electronic apparatus according to claim 1, wherein
the at least one first source device is among a plurality of source devices, and
the processor controls signals of some of the plurality of source devices including the at least one first source device to be output to the intermediation apparatus through the signal input/output in response to a request of the intermediation apparatus or an external electronic apparatus.

3. The electronic apparatus according to claim 1, wherein
the at least one first source device is among a plurality of source devices, and
the signal input/output outputs the signal of the at least one first source device to the intermediation apparatus in response to a high definition multimedia interface (HDMI) consumer electronics control (CEC) control signal received from the intermediation apparatus or an external electronic apparatus.

4. A display apparatus comprising:
a display;
a signal input structured to receive a signal of a first source device connected to an electronic apparatus from the electronic apparatus, or receive a signal of at least one second source device that outputs the signal to an intermediation apparatus;
a user input structured to receive an input of a user; and
a processor configured to:
transmit information of the first source device to the intermediation apparatus,
receive information of the at least one second source device from the intermediation apparatus,
control the signal of the at least one second source device that is received through the intermediation apparatus to be input to the signal input through the electronic apparatus in response to the input of the user based on the received information, and control the display to display an image based on the signal of the at least one second source device.

5. The display apparatus according to claim 4, wherein the processor controls the display to display a user interface (Ul) to allow a user to select one source device among the first source device and the at least one second source device.

6. The display apparatus according to claim 4, further comprising:
a remote controller,
wherein the information of the at least one second source device includes remote-controller keyset information corresponding to the at least one second source device, and
the processor:
controls the display to display the image based on the input signal from the at least one second source device, and
transmits a control signal generated by referring to the remote-controller keyset information to the intermediation apparatus in response to a control command received through the remote controller with regard to the image.

7. An intermediation apparatus comprising:
a signal input/output structured to input and output a signal between a plurality of electronic apparatuses and at least one source device, respectively, the plurality of electronic apparatuses being connectable with at least one source device; and
a processor configured to:
transmit information of the at least one source device while the at least one source device is connected to a first electronic apparatus, among the plurality of electronic apparatuses, to a second electronic apparatus, and
control the signal input/output to output a signal of the at least one source device while the at least one source device is connected to the first electronic apparatus, among the plurality of electronic apparatuses, to the second electronic apparatus in response to a request of the second electronic apparatus.

8. The intermediation apparatus according to claim 7, wherein
the signal input/output is among a plurality of signal inputs, a plurality of signal outputs, and a switch to connect one signal input among the plurality of signal inputs with one signal output among the plurality of signal outputs, and
the processor controls the switch to connect the one signal input and the one signal output which are matched so as to output the signal of the at least one source device connected to the first electronic apparatus to the second electronic apparatus, in response to the request of the second electronic apparatus.

9. The intermediation apparatus according to claim 7, wherein the processor controls the signal input/output to output the signal of the at least one source device connected to the first electronic apparatus to each of the plurality of electronic apparatuses, in response to a request of the first electronic apparatus.

10. A display apparatus comprising:
a display;
a device connector structured to connect with at least one first source device;
a signal input/output structured to output a signal of the at least one first source device to a different display apparatus, or receive a signal of at least one second source device connected to the different display apparatus through an intermediation apparatus;
a user input structured to receive an input of a user; and
a processor configured to:
transmit information of the at least one first source device to the intermediation apparatus,
control the signal of the at least one first source device to be output through the signal input/output,
receive information of the at least one second source device from the intermediation apparatus,
control the signal of the at least one second source device that is received through the intermediation apparatus to be input through the signal input/output in response to the input of the user based on the received information, and control the display to display an image based on the input signal.

11. The display apparatus according to claim 10, wherein
the at least one first source device is among a plurality of source devices, and
the processor controls signals of some of the plurality of source devices including the at least one first source device to be output to the intermediation apparatus through the signal input/output in response to a request of the intermediation apparatus or an external electronic apparatus.

12. The display apparatus according to claim 10, wherein
the at least one first source device is among a plurality of source devices, and
the signal input/output outputs the signal of the at least one first source device to the intermediation apparatus in response to a high definition multimedia interface (HDMI) consumer electronics control (CEC) control signal received from the intermediation apparatus or an external electronic apparatus.

13. The display apparatus according to claim 10, wherein the processor controls the display to display a user interface (Ul) for allowing the user to select one source device among the at least one first source device and the at least one second source device.

14. The display apparatus according to claim 10, further comprising:
a remote controller,
wherein the information of the at least one second source device includes remote-controller keyset information corresponding to the at least one second source device,
the processor:
controls the display to display an image based on the input signal from the at least one second source device, and
transmits a control signal generated by referring to the remote-controller keyset information to the intermediation apparatus, in response to a control command received through the remote controller with regard to the image.

15. A display apparatus comprising:
a display;
a user input structured to receive an input of a user; and
a signal input/output structured to input and output a signal between a plurality of display apparatuses connectable with at least one first source device; and
a processor configured to:
transmit information of the at least one first source device, while the at least one first source device is connected to a first display apparatus among the plurality of display apparatuses, to a second display apparatus,
control the signal input/output to output a signal of the at least one first source device to the second display apparatus in response to a request of the second display apparatus,
control the signal input/output to receive the signal of the at least one first source device connected to the first display apparatus or second display apparatus in response to the input of the user based on the information of the at least one first source device or the information of a second source device connected to the second display apparatus, and
control the display to display an image based on the input signal.
